# EUROPEAN PATENT APPLICATION

(11) **EP 4 465 663 A1**
(43) Date of publication of application: **20.11.2024**
(21) Application number: 22922386.2
(22) Date of filing: 29.12.2022
(51) Int. Cl.: H04W 4/02, H04W 4/80, G01S 13/02

(54) **ELECTRONIC DEVICE FOR PROVIDING DISTANCE-BASED SERVICE AND OPERATION METHOD THEREOF**

(30) Priority: 20.01.2022 KR 20220008321
(71) Applicant: Samsung Electronics Co., Ltd, Suwon-si, Gyeonggi-do 16677 (KR)
(72) Inventor: JUNG, Dawoon, Suwon-si, Gyeonggi-do 16677 (KR); HAN, Kwanghoon, Suwon-si, Gyeonggi-do 16677 (KR); KANG, Hyejin, Suwon-si, Gyeonggi-do 16677 (KR); KIM, Heesu, Suwon-si, Gyeonggi-do 16677 (KR); CHOI, Jihye, Suwon-si, Gyeonggi-do 16677 (KR)
(74) Representative: Gulde & Partner
(86) International application number: PCT/KR2022/021660
(87) International publication number: WO 2023/140530

(57) **Abstract**

According to an embodiment, an electronic device (500) includes a communication circuit (502) and at least one processor (504) operatively connected to the communication circuit. The electronic device is configured to determine whether a condition for sharing ranging information in a distance-based service is satisfied. The electronic device is configured to transmit a first message, requesting the sharing of the ranging information, via the communication circuit on the basis of determining that the condition for sharing the ranging information is satisfied. The electronic device is configured to receive a second message, including the ranging information, from the at least one external electronic device (101) in response to the first message. Other embodiments may be possible.

## Description

### [Technical Field]

An embodiment of the disclosure relates to an electronic device for providing a distance-based service (DBS) and an operating method thereof.

### [Background Art]

Recently, with the development of an information and communication technology, various wireless communication schemes and various services have been developed. In particular, a ultra wide band (UWB) scheme is a communication scheme which may transmit and receive a signal using a very short pulse (e.g., several nanoseconds) at low power over a wide band. In the past, the UWB scheme was used for a military purpose such as a military radar and remote detection, but since the U.S. federal communications commission (FCC) permitted a commercial use of the UWB, limiting it to an indoor wireless communication field, the UWB scheme has been used in various fields.

The UWB scheme is attracting attention as a scheme which may recognize and track a precise location of an electronic device in an internet of things (IoT) environment or a ubiquitous environment in the future. The UWB scheme may be used in various fields such as indoor and outdoor location tracking, indoor navigation, asset tracking, disaster-related industrial robots, home and building automation, a smart key service for vehicle and home, or unmanned payment system.

As the UWB scheme is used, a distance between electronic devices may be accurately measured with an error within several centimeters. As relatively precise distance measurement becomes possible according to the UWB scheme, demand for not only location-based service (LBS) but also distance-based service (DBS) is increasing.

In the distance-based service, a UWB measurement operation (e.g., a distance measurement operation) based on the UWB scheme may be performed via packet exchange between a tag UWB device which initiates the distance-based service and a node UWB device which responds to the tag UWB device. The tag UWB device may be a requester UWB device in a UWB ranging protocol, and the node UWB device may be a responder UWB device which responds to the requester UWB device. The requestor UWB device and the responder UWB device may perform a UWB ranging operation to measure (or estimate) a distance between the requester UWB device and the responder UWB device.

Because the UWB ranging operation is performed in a form in which the requester UWB device and the responder UWB device exchange a UWB ranging request message and a UWB ranging response message on a one-to-one basis, if the number of UWB devices participating in the distance-based service is greater than a threshold value, time required to normally complete the exchange of the UWB ranging request message and the UWB ranging response message may become longer, so real-time distance measurement may not be possible.

If the number of UWB devices participating in the distance-based service is greater than the threshold value, time points at which UWB ranging response messages are received may overlap, and a collision for the UWB ranging response messages may occur due to the overlap. Real-time distance measurement may be impossible due to occurrence of the collision. A probability that a collision will occur for UWB ranging response messages may increase as the number of UWB devices participating in distance-based services increases.

If the UWB ranging operation is not performed normally because the UWB devices participating in the distance-based service are out of a UWB ranging range or there is an obstacle between UWB devices, the real-time distance measurement may be impossible.

An embodiment of the disclosure may provide an electronic device for providing a distance-based service and an operating method thereof.

An embodiment of the disclosure may provide an electronic device for providing a distance-based service capable of relaying ranging information and an operating method thereof.

### [Detailed Description of the Invention]

### [Technical Solution]

According to an embodiment of the disclosure, an electronic device may include a communication circuit, and at least one processor operatively connected with the communication circuit.

According to an embodiment of the disclosure, the at least one processor may be configured to identify whether a condition for sharing ranging information in a distance-based service is satisfied.

According to an embodiment of the disclosure, the at least one processor may be configured to transmit, via the communication circuit, a first message requesting to share the ranging information, based on identifying that the condition for sharing the ranging information is satisfied.

According to an embodiment of the disclosure, the at least one processor may be further configured to receive, from at least one external electronic device via the communication circuit, a second message including the ranging information in response to the first message.

According to an embodiment of the disclosure, an electronic device may include a communication circuit, and at least one processor operatively connected with the communication circuit.

According to an embodiment of the disclosure, the at least one processor may be configured to perform, via the communication circuit, a ranging operation for a distance-based service with at least one external electronic device.

According to an embodiment of the disclosure, the at least one processor may be further configured to receive, via the communication circuit, a first message requesting to share ranging information from another external electronic device.

According to an embodiment of the disclosure, the at least one processor may be further configured to transmit, to the other external electronic device via the communication circuit, a second message including ranging information related to a ranging operation performed with the at least one external electronic device in response to the first message.

According to an embodiment of the disclosure, an operating method of an electronic device may include identifying whether a condition for sharing ranging information in a distance-based service is satisfied.

According to an embodiment of the disclosure, the operating method may further include transmitting a first message requesting to share the ranging information, based on identifying that the condition for sharing the ranging information is satisfied.

According to an embodiment of the disclosure, the operating method may further include receiving, from at least one external electronic device, a second message including the ranging information in response to the first message.

According to an embodiment of the disclosure, an operating method of an electronic device may include performing a ranging operation for a distance-based service with at least one external electronic device.

According to an embodiment of the disclosure, the operating method may further include receiving a first message requesting to share ranging information from another external electronic device.

According to an embodiment of the disclosure, the operating method may further include transmitting, to the other external electronic device, a second message including ranging information related to a ranging operation performed with the at least one external electronic device in response to the first message.

According to an embodiment of the disclosure, a non-transitory computer readable storage medium may include one or more programs, the one or more programs comprising instructions configured to, when executed by at least one processor of an electronic device, cause the electronic device to identify whether a condition for sharing ranging information in a distance-based service is satisfied.

According to an embodiment, the instructions may be further configured to cause the electronic device to transmit a first message requesting to share the ranging information, based on identifying that the condition for sharing the ranging information is satisfied.

According to an embodiment, the instructions may be further configured to cause the electronic device to receive, from at least one external electronic device, a second message including the ranging information in response to the first message.

According to an embodiment of the disclosure, a non-transitory computer readable storage medium may include one or more programs, the one or more programs comprising instructions configured to, when executed by at least one processor of an electronic device, cause the electronic device to perform a ranging operation for a distance-based service with at least one external electronic device.

According to an embodiment, the instructions may be further configured to cause the electronic device to receive a first message requesting to share ranging information from another external electronic device.

According to an embodiment, the instructions may be further configured to cause the electronic device to transmit, to the other external electronic device, a second message including ranging information related to a ranging operation performed with the at least one external electronic device in response to the first message.

### [Brief Description of Drawings]

FIG. 1 is a block diagram illustrating an electronic device in a network environment according to an embodiment.
FIG. 2 is a diagram illustrating an example of an operating scenario according to a distance-based service in a wireless communication network according to an embodiment.
FIG. 3 is a block diagram illustrating an example of an internal structure of an electronic device according to an embodiment.
FIG. 4 is a block diagram illustrating an example of an internal structure of an external electronic device according to an embodiment.
FIG. 5 is a block diagram illustrating another example of an internal structure of a second external electronic device according to an embodiment.
FIG. 6 is a diagram illustrating an example of a process for sharing UWB ranging information in a wireless communication network according to an embodiment.
FIG. 7 is a diagram illustrating an operation of UWB devices according to a process for sharing UWB ranging information in a wireless communication network according to an embodiment.
FIG. 8 is a diagram illustrating an example of a scheme for identifying a need for information sharing in a wireless communication network according to an embodiment.
FIG. 9 is a diagram illustrating another example of a scheme for identifying a need for information sharing in a wireless communication network according to an embodiment.
FIG. 10 is a diagram illustrating an example of an operation of UWB devices according to a process for sharing UWB ranging information in a wireless communication network according to an embodiment.
FIG. 11 is a diagram illustrating an example of a format of an information sharing request message in a wireless communication network according to an embodiment.
FIG. 12 is a diagram illustrating an example of a format of an information sharing response message in a wireless communication network according to an embodiment.
FIG. 13 is a diagram illustrating another example of a process for sharing UWB ranging information in a wireless communication network according to an embodiment.
FIG. 14 is a diagram illustrating an example of an operating process of a second external electronic device in a wireless communication network according to an embodiment.
FIG. 15 is a diagram illustrating an example of an operating process of an electronic device in a wireless communication network according to an embodiment.
FIG. 16 is a diagram illustrating a scenario according to a process for sharing UWB ranging information in a wireless communication network according to an embodiment.

### [Mode for Carrying out the Invention]

Hereinafter, an embodiment of the disclosure will be described in detail with reference to the accompanying drawings. In the following description of an embodiment of the disclosure, a detailed description of relevant known functions or configurations incorporated herein will be omitted when it is determined that the description may make the subject matter of an embodiment of the disclosure unnecessarily unclear. The terms which will be described below are terms defined in consideration of the functions in the disclosure, and may be different according to users, intentions of the users, or customs, and/or the like. Therefore, the definitions of the terms should be made based on the contents throughout the specification.

It should be noted that the technical terms used herein are only used to describe specific embodiments, and are not intended to limit the disclosure. Alternatively, the technical terms used herein should be interpreted to have the same meaning as those commonly understood by a person skilled in the art to which the disclosure pertains, and should not be interpreted have excessively comprehensive or excessively restricted meanings unless particularly defined as other meanings. Alternatively, when the technical terms used herein are wrong technical terms that cannot correctly represent the idea of the disclosure, it should be appreciated that they are replaced by technical terms correctly understood by those skilled in the art. Alternatively, the general terms used herein should be interpreted as defined in dictionaries or interpreted in the context of the relevant part, and should not be interpreted to have excessively restricted meanings.

Alternatively, a singular expression used herein may include a plural expression unless they are definitely different in the context. As used herein, such an expression as "comprises" or "include", and/or the like should not be interpreted to necessarily include all elements or all operations described in the specification, and should be interpreted to be allowed to exclude some of them or further include additional elements or operations.

Alternatively, the terms including an ordinal number, such as expressions "a first", "a second", and/or the like may be used to described various elements, but the corresponding elements should not be limited by such terms. These terms are used merely to distinguish between one element and any other element. For example, a first element may be termed a second element, and similarly, a second element may be termed a first element without departing from the scope of the disclosure.

It should be understood that when an element is referred to as being "connected" or "coupled" to another element, it may be connected or coupled directly to the other element, or any other element may be interposer between them. In contrast, it should be understood that when an element is referred to as being "directly connected" or "directly coupled" to another element, there are no element interposed between them.

Hereinafter, an embodiment of the disclosure will be described in detail with reference to the accompanying drawings. Regardless of drawing signs, the same or like elements are provided with the same reference numeral, and a repeated description thereof will be omitted. Alternatively, in describing an embodiment of the disclosure, a detailed description of relevant known technologies will be omitted when it is determined that the description may make the subject matter of the disclosure unclear. Alternatively, it should be noted that the accompanying drawings are presented merely to help easy understanding of the technical idea of the disclosure, and should not be construed to limit the technical idea of the disclosure. The technical idea of the disclosure should be construed to cover all changes, equivalents, and alternatives, in addition to the drawings.

Hereinafter, an embodiment of the disclosure will describe an electronic device, but the electronic device may be also referred to as a terminal, a mobile station, a mobile equipment (ME), a user equipment (UE), a user terminal (UT), a subscriber station (SS), a wireless device, a handheld device, and an access terminal (AT). Alternatively, in an embodiment of the disclosure, the terminal may be a device having a communication function such as, for example, a mobile phone, a personal digital assistant (PDA), a smart phone, a wireless MODEM, and a notebook.

In a detailed description of an embodiment of the disclosure, a ultra wide band (UWB) standard which may be specified by Institute of Electrical and Electronics Engineers (IEEE) 802.15.4/4z or a FiRa standard which may be prescribed by a FiRa Consortium which is a consortium based on a UWB standard is referred to, but the main subject of the disclosure can be somewhat modified and applied to another communication system having a similar technical background and using other standards without departing from the scope of the disclosure, and the modifications can be made on the basis of determination of those skilled in the art.

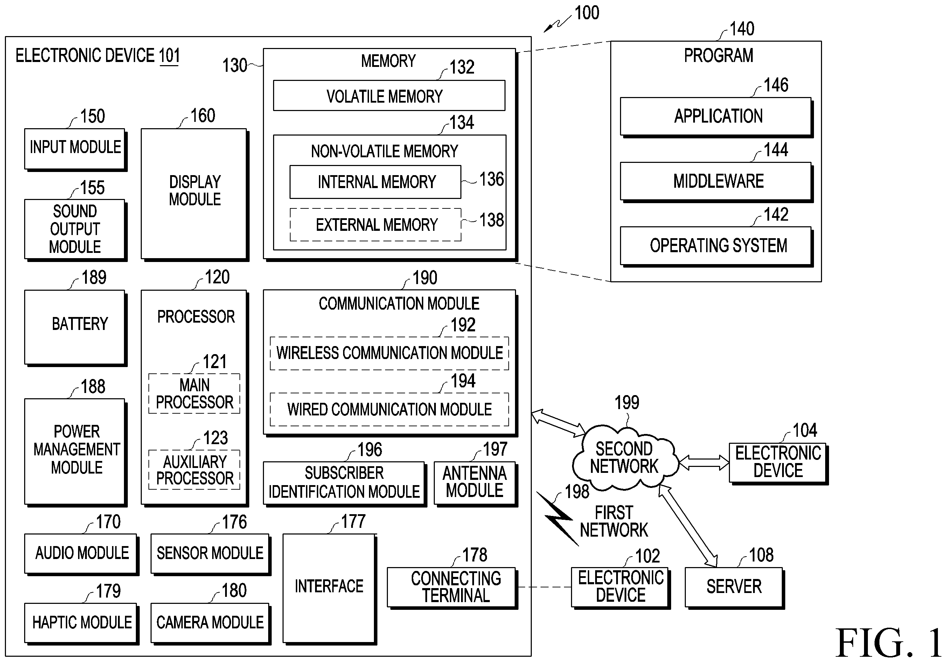

FIG. 1 is a block diagram illustrating an electronic device 101 in a network environment 100 according to an embodiment.

Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control, for example, at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active (e.g., executing an application) state. According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence model is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or an external electronic device (e.g., an electronic device 102 (e.g., a speaker or a headphone)) directly or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197. According to an embodiment, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to an embodiment may be one of various types of electronic devices. The electronic devices may include, for example, a portable communication device (e.g., a smart phone), a computer device, a portable multimedia device, a portable medical device, a camera, a wearable device, or a home appliance. According to an embodiment of the disclosure, the electronic devices are not limited to those described above.

It should be appreciated that an embodiment of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with an embodiment of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

An embodiment as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities, and some of the multiple entities may be separately disposed in different components. According to an embodiment, one or more of the above-described components or operations may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to an embodiment, operations performed by the module, the program, or another component may be carried out sequentially, in parallel, repeatedly, or heuristically, or one or more of the operations may be executed in a different order or omitted, or one or more other operations may be added.

An embodiment may provide an electronic device for providing a distance-based service (DBS) and an operating method thereof in a wireless communication network. In an embodiment, the distance-based service may be based on real-time distance measurement based on a UWB scheme and may not require a separate pairing procedure. The distance-based service according to an embodiment does not require the separate pairing procedure, so it may also be referred to as an anonymous distance-based service. In the distance-based service according to an embodiment, it may be possible to relay UWB ranging information.

Characteristics of services based on the UWB scheme may be as shown in Table 1 below. The services based on the UWB scheme may include an anonymous distance-based service, an identified distance-based service (identified DBS), an anonymous location-based service (LBS), and an identified location-based service.

**<Table 1>**

| | **Anonymous DBS** | Identified DBS | | Anonymou s LBS | Identified LBS |
|---|---|---|---|---|---|
| Typical Application | **Pedestrian Safety** | Smart Car Key | Lost & Found | Indoor Positioning | Home IoT |
| Service Pairing | **Spontaneous (unplanned)** | Planned | Planne d | Spontaneo us | Planned |
| Relationsh ips | **Many-to-Many** | One-to-One | One-to-One | One-to-Many | One-to-Many |
| Ranging cycle unit | **msec** | supra-sec | supra-sec | supra-sec | supra-sec |

As shown in Table 1, the services based on the UWB scheme may be classified into the anonymous distance-based service, the identified distance-based service, the anonymous location-based service, and the identified location-based service according to characteristics thereof.

First, the anonymous distance-based service will be described as follows.

A typical application of the anonymous distance-based service may include a pedestrian safety service. In the anonymous distance-based service, service pairing (e.g., a pairing procedure) is not required, so the anonymous distance-based service may have an anonymous (or unplanned) characteristic in terms of service pairing. In the anonymous distance-based service, the service pairing is not required, so UWB roles of electronic devices participating in the anonymous distance-based service may not be fixed. The UWB roles of the electronic devices participating in the anonymous distance-based service may not be fixed, so the electronic devices participating in the anonymous distance-based service may not know each other's UWB roles. The anonymous distance-based service may support many-to-many relationship, so a plurality of electronic devices may form relationships with a plurality of other electronic devices. In the anonymous distance-based service, the many-to-many relationship is supported, so electronic devices participating in the anonymous distance-based service may change dynamically. A plurality of electronic devices participate in the anonymous distance-based service, so faster real-time distance measurement may be required. In the anonymous distance-based service, a ranging cycle unit may be millisecond (msec).

Second, the identified distance-based service will be described as follows.

A typical application of the identified distance-based service may include a smart car key service and/or a lost & found service. The identified distance-based service requires service pairing, so the identified distance-based service may have a planned characteristic in terms of service pairing. In the identified distance-based service, the service pairing is required, so UWB roles of electronic devices participating in the identified distance-based service may be fixed. Because the UWB roles of the electronic devices participating in the identified distance-based service may be fixed, the electronic devices participating in the identified distance-based service may know each other's UWB roles. The identified distance-based service may support one-to-one relationship, so two electronic devices may form one-to-one relationship. In the identified distance-based service, a ranging cycle unit may be several seconds (supra-sec).

Third, the anonymous location-based service will be described as follows.

A typical application of the anonymous location-based service may include an indoor positioning service. In the anonymous location-based service, service pairing is not required, so the anonymous location-based service may have an anonymous (or unplanned) characteristic in terms of service pairing. Because the service pairing is not required in the anonymous location-based service, UWB roles of electronic devices participating in the anonymous location-based service may not be fixed. Because the UWB roles of electronic devices participating the anonymous location-based service may not be fixed, the electronic devices participating in the anonymous location-based service may not know each other's UWB roles. The anonymous location-based service may support one-to-many relationship, so one electronic device and a plurality of electronic devices may form one-to-many relationship. In the anonymous location-based service, a ranging cycle unit may be several seconds.

Fourth, the identified location-based service will be described as follows.

A typical application of the identified location-based service may include a home internet of things (IoT) service. In the identified location-based service, service pairing is required, so the identified location-based service may have a planned characteristic in terms of service pairing. In the identified location-based service, the service pairing is required, so UWB roles of electronic devices participating in the identified location-based service may be fixed. Because the UWB roles of the electronic devices participating in the identified location-based service may not be fixed, the electronic devices participating in the identified location-based service may know each other's UWB roles. The identified location-based service may support one-to-many relationship, so one electronic device and a plurality of electronic devices may form one-to-many relationship. In the identified location-based service, a ranging cycle unit may be several seconds.

A distance-based service proposed in an embodiment of the disclosure may be an anonymous distance-based service. As described in Table 1, the anonymous distance-based service may be based on real-time UWB measurement operation (e.g., a real-time distance measurement operation) between a plurality of anonymous electronic devices.

An embodiment of the disclosure may provide an electronic device for providing a distance-based service capable of relaying UWB ranging information to a UWB electronic device in which a direct ranging operation is impossible, and an operating method thereof.

An embodiment of the disclosure may provide an electronic device for providing a distance-based service capable of adaptively adjusting the number of UWB electronic devices which perform a direct ranging operation, and an operating method thereof.

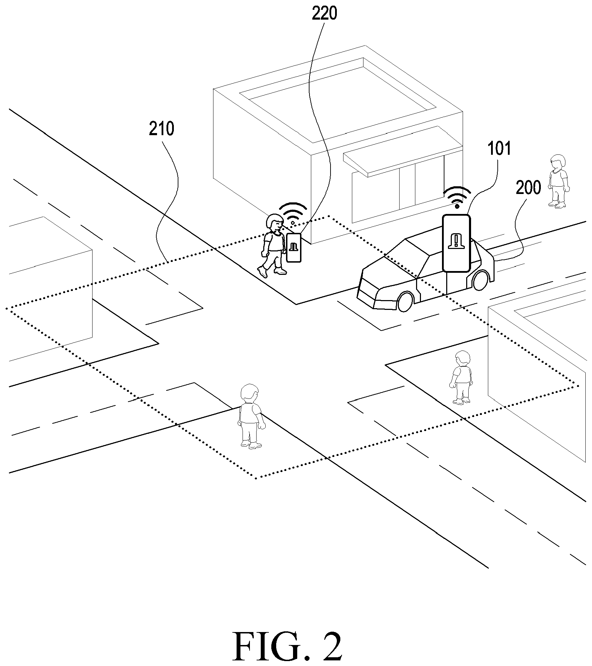

FIG. 2 is a diagram illustrating an example of an operating scenario according to a distance-based service in a wireless communication network according to an embodiment.

Referring to FIG. 2, a distance-based service may include a pedestrian safety service. The pedestrian safety service may provide information notifying a risk of collision between a vehicle and a pedestrian in a set service area (e.g., a distance-based service area). In an embodiment, the information notifying the risk of collision between the vehicle and the pedestrian may be outputted in a form of a message. For example, if the pedestrian safety service is a service notifying a collision risk for child, the service area may be a school zone, and the service notifying the collision risk for child may output a message notifying the risk of collision between a vehicle and a child.

Each of an electronic device 101 (e.g., an electronic device 101 in FIG. 1) and an external electronic device 220 (e.g., an electronic device 102 in FIG. 1) may be a UWB device, and may perform a UWB measurement operation (e.g., a distance measurement operation) based on a UWB scheme. In an embodiment, the UWB device may be an electronic device which implements the UWB scheme. In an embodiment, the electronic device 101 may be a tag UWB device which initiates a distance-based service, and the external electronic device 220 may be a node UWB device which responds to the tag UWB device. In an embodiment, a UWB role may include a tag which initiates a service, and a node which responds to the tag, in terms of the service. The tag UWB device may represent a UWB device operating as the tag, and the node UWB device may represent a UWB device operating as the node.

In an embodiment, the electronic device 101 may include a smart phone and/or a wearable device of a driver riding in a vehicle 200, and/or a vehicle electronic device built into the vehicle 200, and the external electronic device 220 may include a smart phone and/or wearable device of a pedestrian. In the distance-based service according to an embodiment, many-to-many relationship may be formed, so UWB connections may be established among a plurality of electronic devices including the electronic device 101 and a plurality of external electronic devices including the external electronic device 220. In FIG. 2, for convenience of a description, an operating scenario according to a distance-based service will be described using a case that there is one tag UWB device (e.g., the electronic device 101) as an example.

If a set first condition (e.g., a condition for initiating a distance-based service) is satisfied, the electronic device 101 may initiate the distance-based service. In an embodiment, the first condition may include a condition that the electronic device 101 exists in a set service area (e.g., a distance-based service area) 210 and the electronic device 101 is moving. In FIG. 2, it has been assumed that the distance-based service is the pedestrian safety service, so the first condition includes the condition that the electronic device 101 exists in the service area 210 and the electronic device 101 is moving, but if the distance-based service is not the pedestrian safety service, the first condition may be changed to suit the corresponding service.

After initiating the distance-based service, the electronic device 101 may select at least one target node UWB device which will perform a UWB measurement operation with the electronic device 101 based on a set second condition (e.g., a condition for initiating a UWB measurement operation). In an embodiment, the target node UWB device may represent a node UWB device for which the electronic device 101 will measure a distance. For example, if a plurality of node UWB devices exist in the service area 210, the electronic device 101 may select at least one of the plurality of external electronic devices existing in the service area 210 based on the second condition, and measure a distance between the selected node UWB device and the electronic device 101.

After selecting the at least one node UWB device which will measure the distance to the electronic device 101 among the plurality of node UWB devices existing in the service area 210 based on the second condition, the electronic device 101 may perform a UWB measurement operation with the at least one selected node UWB device. In FIG. 2, the at least one selected node UWB device may be the external electronic device 220.

In an embodiment, the electronic device 101 may estimate (for example, measure) a distance between the electronic device 101 and the external electronic device 220 in a set unit (e.g., msec) based on the UWB scheme. In an embodiment, the external electronic device 220 may also estimate a distance between the external electronic device 220 and the electronic device 101 based on the UWB scheme.

If the estimated distance between the electronic device 101 and the external electronic device 220 is less than or equal to a threshold distance, the electronic device 101 may perform a set operation. In an embodiment, the set operation may include an operation of providing information notifying a risk of collision between a vehicle and a pedestrian. In an embodiment, if the estimated distance between the electronic device 101 and the external electronic device 220 is less than or equal to the threshold distance, the electronic device 101 may output a message notifying the risk of collision between the vehicle and the pedestrian.

If the estimated distance between the external electronic device 220 and the electronic device 101 is less than or equal to the threshold distance, a set operation may be performed. In an embodiment, the set operation may include an operation of providing the information notifying a risk of collision between the vehicle and the pedestrian. In an embodiment, if the estimated distance between the external electronic device 220 and the electronic device 101 is less than or equal to the threshold distance, the external electronic device 220 may output a message notifying the risk of collision between the vehicle and the pedestrian.

In an embodiment, UWB devices may not perform a UWB measurement operation (e.g., a distance measurement operation) due to various reasons as follows.

In the UWB measurement operation, because the UWB ranging operation is performed in a form in which a requester UWB device and a responder UWB device exchange a UWB ranging request message and a UWB ranging response message on a one-to-one basis, if the number of UWB devices participating in the distance-based service is greater than a threshold value, time required to normally complete the exchange of the UWB ranging request message and the UWB ranging response message may become longer, so real-time distance measurement may not be possible.

If the number of UWB devices participating in the distance-based service is greater than the threshold value, time points at which UWB ranging response messages are received may overlap, and a collision for the UWB ranging response messages may occur due to the overlap. Real-time distance measurement may be impossible due to occurrence of the collision. A probability that a collision will occur for UWB ranging response messages may increase as the number of UWB devices participating in distance-based services increases.

If the UWB ranging operation is not performed normally because the UWB devices participating in the distance-based service are out of a UWB ranging range or there is an obstacle between UWB devices, the real-time distance measurement may be impossible.

An embodiment of the disclosure may provide a distance-based service in which information about a target UWB device (e.g., UWB ranging information) may be obtained via a neighbor UWB device even though a UWB ranging operation for the target UWB device fails.

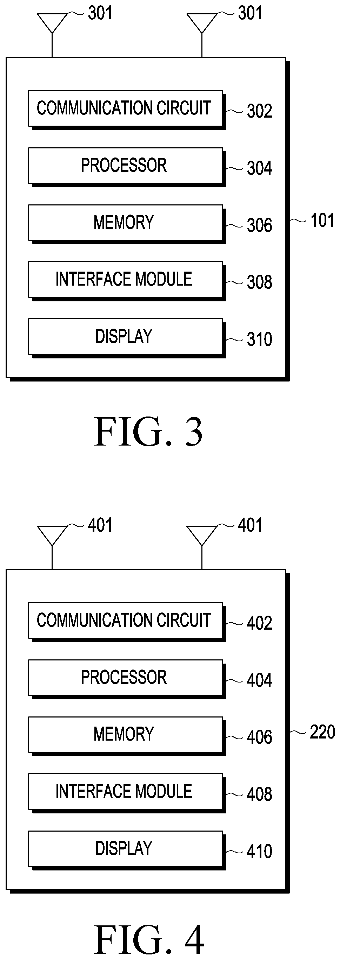

FIG. 3 is a block diagram illustrating an example of an internal structure of an electronic device according to an embodiment.

Referring to FIG. 3, an electronic device 101 (e.g., an electronic device 101 in FIG. 1 or 2) may be a UWB device which provides a distance-based service (e.g., an anonymous distance-based service). For example, the distance-based service may include a pedestrian safety service.

In an embodiment, a UWB role may include a tag which initiates a service and a node which responds to the tag in terms of the service. A tag UWB device may represent a UWB device operating as the tag, and a node UWB device may represent a UWB device operating as the node. In an embodiment, the electronic device 101 may be a tag UWB device which initiates the distance-based service.

In an embodiment, in terms of a UWB measurement operation, a UWB role may include a requestor which initiates a UWB ranging operation and a responder which responds to the requestor. A requester UWB device may represent a UWB device operating as the requester, and a responder UWB device may represent a UWB device operating as the responder. In an embodiment, the electronic device 101 may be a requestor UWB device which initiates the UWB measurement operation.

In an embodiment, in terms of spread of information (e.g., UWB ranging information) (e.g., spread of service), a UWB role may include a questioner which requests information sharing and an answerer which responds to the questioner. If the questioner fails to obtain UWB ranging information due to a failure in a UWB relay operation, the questioner may transmit, to the answerer, an information share request message requesting the answerer to share UWB ranging information stored by the answerer. If the information share request message requesting to share the UWB ranging information is received, the responder may transmit an information share response message including the UWB ranging information stored by the responder. A requestor UWB device may represent a UWB device operating as the requestor, and an answerer UWB device may represent a UWB device operating as the answerer. In an embodiment, the answerer UWB device may be a UWB device with a relatively low probability of collision occurring in the UWB ranging operation. The requestor UWB device may not identify whether the requestor UWB device itself exists within a UWB ranging range or outside the UWB ranging range during the UWB ranging operation. In an embodiment, the electronic device 101 may be an answerer UWB device which shares UWB ranging information.

The electronic device 101 (e.g., an electronic device 101 in FIG. 1) may be a device implementing a location-based service (e.g., an automation service and/or a finding service). The electronic device 101 may be may be a device supporting a long term evolution (LTE) scheme, a Zigbee, a Z-Wave, a Wi-Fi scheme, a Bluetooth scheme (e.g., a Bluetooth low energy (BLE) scheme), a UWB scheme, and/or a GPS scheme. The electronic device 101 may include a communication circuit 302 (e.g., a communication module 190 in FIG. 1) for transmitting and receiving signals to and from at least one external electronic device (e.g., an electronic device 102 in FIG. 1 or an external electronic device 220 in FIG. 2) using one or more antennas 301. In an embodiment, the one or more antennas 301 may be implemented as a part of an antenna module 198 in FIG. 1.

According to an embodiment, the communication circuit 302 may include a plurality of communication circuits, and the plurality of communication circuits may include a communication circuit which is based on the LTE scheme, the BLE scheme, the UWB scheme, the Zigbee scheme, the Z-wave scheme, and/or the Wi-Fi scheme. According to an embodiment, the electronic device 101 may not include a separate communication circuit which is based on each of the LTE scheme, the BLE scheme, the UWB scheme, the Zigbee scheme, the Z-Wave scheme, and/or the Wi-Fi scheme, and may include a communication circuit which is based on at least two of the LTE scheme, the BLE scheme, the UWB scheme, the Zigbee scheme, the Z-Wave scheme, and/or the Wi-Fi scheme, or all of the LTE scheme, the BLE scheme, the UWB scheme, the Zigbee scheme, the Z-Wave scheme, and/or the Wi-Fi scheme. According to an embodiment, the communication circuit which is based on the at least two of the LTE scheme, the BLE scheme, the UWB scheme, the Zigbee scheme, the Z-Wave scheme, and/or the Wi-Fi scheme, or all of the LTE scheme, the BLE scheme, the UWB scheme, the Zigbee scheme, the Z-Wave scheme, and/or the Wi-Fi scheme may be the communication circuit 302.

The electronic device 101 may include an interface 308 (e.g., an interface 177 in FIG. 1) which provides a wired and/or wireless interface for communicating with components outside a network. In an embodiment, at least a portion of the one or more antennas 301, the communication circuit 302, or the interface 177 may be implemented as at least a portion of the communication module 190 and the antenna module 198 in FIG. 1.

The electronic device 101 may include a processor 304 (e.g., a processor 120 in FIG. 1) which may be implemented with one or more single-core processors or one or more multi-core processors, and a memory 306 (e.g., a memory 130 in FIG. 1) which stores instructions for an operation of the electronic device 101.

According to an embodiment, the memory 306 may include a UI related to an application for executing a distance-based service, and images, user information, documents, databases, or related data for providing the UI. According to various embodiments, if the application for executing the distance-based service is executed under the control of the processor 304, a display 310 (e.g., a display module 160 in FIG. 1) may display the UI related to the executed application.

FIG. 4 is a block diagram illustrating an example of an internal structure of an external electronic device according to an embodiment.

Referring to FIG. 4, a first external electronic device 220 (e.g., an electronic device 102 in FIG. 1 or an external electronic device 220 in FIG. 2) may be a UWB device providing a distance-based service (e.g., an anonymous distance-based service). For example, the distance-based service may include a pedestrian safety service. In an embodiment, the first external electronic device 220 may be a node UWB device which responds to a tag UWB device. In an embodiment, the first external electronic device 220 may be a responder UWB device which responds to a requestor UWB device.

The first external electronic device 220 may include a communication circuit 402, a processor 404, a memory 406, an interface module 408, and/or a display 410. In an embodiment, the communication circuit 402, the processor 404, the memory 406, the interface module 408, and/or the display 410 may be implemented similarly to or substantially the same as a communication circuit 302, a processor 304, a memory 306, an interface module 308, and/or a display 310 as described in FIG. 3, respectively, and a detailed description thereof will be omitted.

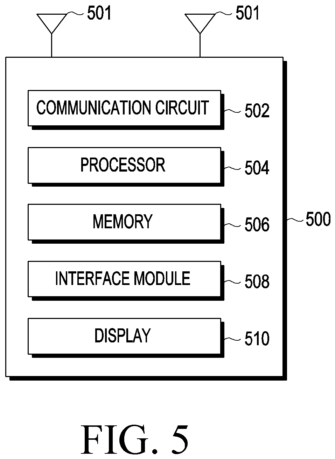

FIG. 5 is a block diagram illustrating another example of an internal structure of a second external electronic device according to an embodiment.

Referring to FIG. 5, a second external electronic device 500 may be a UWB device providing a distance-based service (e.g., an anonymous distance-based service). For example, the distance-based service may include a pedestrian safety service. In an embodiment, the second external electronic device 500 may be a tag UWB device which initiates the distance-based service. In an embodiment, the second external electronic device 500 may be a requestor UWB device which initiates a UWB measurement operation. In an embodiment, the second external electronic device 500 may be a questioner UWB device which requests to share UWB ranging information.

The second external electronic device 510 may include a communication circuit 502, a processor 504, a memory 506, an interface module 508, and/or a display 510. In an embodiment, the communication circuit 502, the processor 504, the memory 506, the interface module 508, and/or the display 510 may be implemented similarly to or substantially the same as a communication circuit 302, a processor 304, a memory 306, an interface module 308, and/or a display 310 as described in FIG. 3, respectively, and a detailed description thereof will be omitted.

According to an embodiment of the disclosure, an electronic device (e.g., a second external electronic device 500 in FIG. 5) may include a communication circuit (e.g., a communication circuit 502 in FIG. 5), and at least one processor (e.g., a processor 504 in FIG. 5) operatively connected with the communication circuit (e.g., the communication circuit 502 in FIG. 5).

According to an embodiment of the disclosure, the at least one processor (e.g., the processor 504 in FIG. 5) may be configured to identify whether a condition for sharing ranging information in a distance-based service is satisfied.

According to an embodiment of the disclosure, the at least one processor (e.g., the processor 504 in FIG. 5) may be further configured to transmit, via the communication circuit (e.g., the communication circuit 502 in FIG. 5), a first message requesting to share the ranging information, based on identifying that the condition for sharing the ranging information is satisfied.

According to an embodiment of the disclosure, the at least one processor (e.g., the processor 504 in FIG. 5) may be further configured to receive, from at least one external electronic device (e.g., an electronic device 101 in FIG. 1, 2, or 3) via the communication circuit (e.g., the communication circuit 502 in FIG. 5), a second message including the ranging information in response to the first message.

According to an embodiment of the disclosure, the at least one processor (e.g., the processor 504 in FIG. 5) may be configured to identify that the condition for sharing the ranging information is satisfied if a ranging operation between the electronic device (e.g., the second external electronic device 500 in FIG. 5) and another external electronic device (e.g., an electronic device 102 in FIG. 1, or an external electronic device 220 in FIG. 2 or 4) fails.

According to an embodiment of the disclosure, the at least one processor (e.g., the processor 504 in FIG. 5) may be configured to identify that the condition for sharing the ranging information is satisfied if a ranging response message is not received from the other external electronic device (e.g., the electronic device 102 in FIG. 1, or the external electronic device 220 in FIG. 2 or 4) in response to the ranging request message transmitted to the other external electronic device (e.g., the electronic device 102 in FIG. 1, or the external electronic device 220 in FIG. 2 or 4).

According to an embodiment of the disclosure, the at least one processor (e.g., the processor 504 in FIG. 5) may be configured to identify that the condition for sharing the ranging information is satisfied, if an opportunity to transmit a ranging request message is not obtained in a ranging period in which it is possible to transmit the ranging request message to the other external electronic device (e.g., the electronic device 102 in FIG. 1, or the external electronic device 220 in FIG. 2 or 4), or if an opportunity to receive a ranging response message is not obtained in a monitoring period in which it is possible to receive the ranging response message from the other external electronic device (e.g., the electronic device 102 in FIG. 1, or the external electronic device 220 in FIG. 2 or 4) in response to the ranging request message transmitted to the other external electronic device (e.g., the electronic device 102 in FIG. 1, or the external electronic device 220 in FIG. 2 or 4).

According to an embodiment of the disclosure, the first message may include at least one of an address indicating that it is a broadcast message, or an identifier (ID) indicating that it is the first message requesting to share the ranging information.

According to an embodiment of the disclosure, the second message may include at least one of an address indicating that it is a broadcast message, an identifier (ID) indicating that it is a response message to the first message, or ranging information between the at least one external electronic device (e.g., the electronic device 101 in FIG. 1, 2, or 3) and the other external electronic device (e.g., the electronic device 102 in FIG. 1, or the external electronic device 220 in FIG. 2 or 4).

According to an embodiment of the disclosure, the ranging information between the at least one external electronic device (e.g., the electronic device 101 in FIG. 1, 2, or 3) and the other external electronic device (e.g., the electronic device 102 in FIG. 1, or the external electronic device 220 in FIG. 2 or 4) may include at least one of estimated time of flight (ToF) between the at least one external electronic device (e.g., the electronic device 101 in FIG. 1, 2, or 3) and the other external electronic device (e.g., the electronic device 102 in FIG. 1, or the external electronic device 220 in FIG. 2 or 4), information indicating a ranging role of each of the at least one external electronic device (e.g., the electronic device 101 in FIG. 1, 2, or 3) and the other external electronic device (e.g., the electronic device 102 in FIG. 1, or the external electronic device 220 in FIG. 2 or 4), information indicating a ranging slot in which a ranging operation between the at least one external electronic device (e.g., the electronic device 101 in FIG. 1, 2, or 3) and the other external electronic device (e.g., the electronic device 102 in FIG. 1, or the external electronic device 220 in FIG. 2 or 4) is to be performed, or an ID of each of a ranging request message and a ranging response message exchanged between the at least one external electronic device (e.g., the electronic device 101 in FIG. 1, 2, or 3) and the other external electronic device (e.g., the electronic device 102 in FIG. 1, or the external electronic device 220 in FIG. 2 or 4).

According to an embodiment of the disclosure, a service role of the electronic device (e.g., the second external electronic device 500 in FIG. 5) may be a tag which initiates the distance-based service, and a ranging role of the electronic device (e.g., the second external electronic device 500 in FIG. 5) is a requester which initiates a ranging operation and a questioner which requests to share the ranging information, a service role of the at least one external electronic device (e.g., the electronic device 101 in FIG. 1, 2, or 3) may be the tag, and a ranging role of the at least one external electronic device (e.g., the electronic device 101 in FIG. 1, 2, or 3) is the requester and an answerer which shares the ranging information, and a service role of the other external electronic device (e.g., the electronic device 102 in FIG. 1, or the external electronic device 220 in FIG. 2 or 4) may be a node which responds to the tag, and a ranging role of the other external electronic device (e.g., the electronic device 102 in FIG. 1, or the external electronic device 220 in FIG. 2 or 4) is the requester and a responder which responds to the requester.

According to an embodiment of the disclosure, an electronic device (e.g., an electronic device 101 in FIG. 1, 2, or 3) may include a communication circuit (e.g., a communication circuit 302 in FIG. 3), and at least one processor (e.g., a processor 304 in FIG. 3) operatively connected with the communication circuit (e.g., the communication circuit 302 in FIG. 3).

According to an embodiment of the disclosure, the at least one processor (e.g., the processor 304 in FIG. 3) may be configured to perform, via the communication circuit (e.g., the communication circuit 302 in FIG. 3), a ranging operation for a distance-based service with at least one external electronic device (e.g., an electronic device 102 in FIG. 1 or an external electronic device 220 in FIG. 2 or 4).

According to an embodiment of the disclosure, the at least one processor (e.g., the processor 304 in FIG. 3) may be further configured to receive, via the communication circuit (e.g., the communication circuit 302 in FIG. 3), a first message requesting to share ranging information from another external electronic device (e.g., a second external electronic device 500 in FIG. 5).

According to an embodiment of the disclosure, the at least one processor (e.g., the processor 304 in FIG. 3) may be further configured to transmit, to the other external electronic device (e.g., the second external electronic device 500 in FIG. 5) via the communication circuit (e.g., the communication circuit 302 in FIG. 3), a second message including ranging information related to a ranging operation performed with the at least one external electronic device (e.g., the electronic device 102 in FIG. 1 or an external electronic device 220 in FIG. 2 or 4) in response to the first message.

According to an embodiment of the disclosure, the first message may be received if the other external electronic device (e.g., the second external electronic device 500 in FIG. 5) fails in a ranging operation with the at least one external electronic device (e.g., the electronic device 102 in FIG. 1, or the external electronic device 220 in FIG. 2 or 4).

According to an embodiment of the disclosure, the first message may include at least one of an address indicating that it is a broadcast message, or an identifier (ID) indicating that it is the first message requesting to share the ranging information, and the second message may include at least one of an address indicating that it is a broadcast message, an identifier (ID) indicating that it is a response message to the first message, or ranging information between the electronic device (e.g., the electronic device 101 in FIG. 1, 2, or 3) and the at least one external electronic device (e.g., the electronic device 102 in FIG. 1, or the external electronic device 220 in FIG. 2 or 4).

According to an embodiment of the disclosure, the ranging information between the electronic device (e.g., the electronic device 101 in FIG. 1, 2, or 3) and the at least one external electronic device (e.g., the electronic device 102 in FIG. 1, or the external electronic device 220 in FIG. 2 or 4) may include at least one of estimated time of flight (ToF) between the electronic device (e.g., the electronic device 101 in FIG. 1, 2, or 3) and the at least one external electronic device (e.g., the electronic device 102 in FIG. 1, or the external electronic device 220 in FIG. 2 or 4), information indicating a ranging role of each of the electronic device (e.g., the electronic device 101 in FIG. 1, 2, or 3) and the at least one external electronic device (e.g., the electronic device 102 in FIG. 1, or the external electronic device 220 in FIG. 2 or 4), information indicating a ranging slot in which a ranging operation between the electronic device (e.g., the electronic device 101 in FIG. 1, 2, or 3) and the at least one external electronic device (e.g., the electronic device 102 in FIG. 1, or the external electronic device 220 in FIG. 2 or 4) is to be performed, or an ID of each of a ranging request message and a ranging response message exchanged between the electronic device (e.g., the electronic device 101 in FIG. 1, 2, or 3) and the at least one external electronic device (e.g., the electronic device 102 in FIG. 1, or the external electronic device 220 in FIG. 2 or 4).

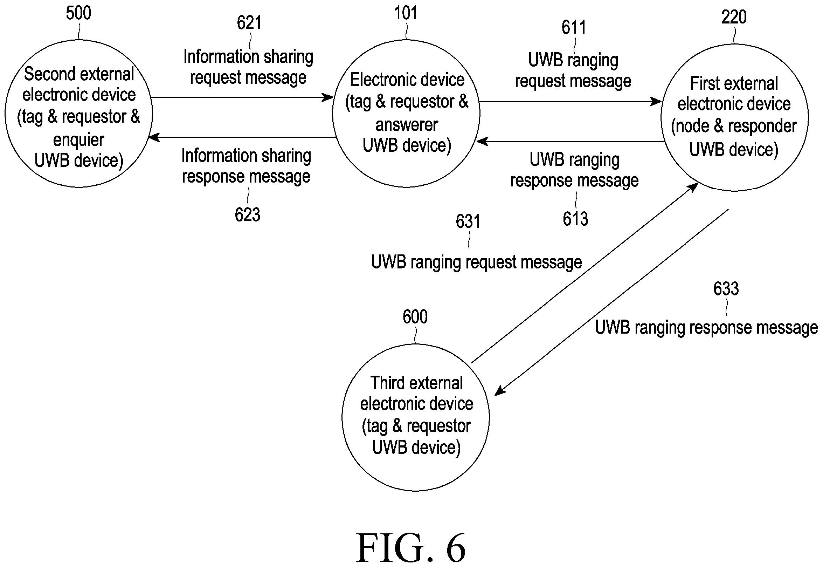

FIG. 6 is a diagram illustrating an example of a process for sharing UWB ranging information in a wireless communication network according to an embodiment.

Referring to FIG. 6, a distance-based service (e.g., an anonymous distance-based service) may include a pedestrian safety service (e.g., a service notifying a collision risk for child).

In an embodiment, an electronic device 101 (e.g., an electronic device 101 in FIG. 1, 2, or 3) may include a smart phone and/or a wearable device of a driver riding in a vehicle. The electronic device 101 may be a tag UWB device, may be a requester UWB device, and may be an answerer UWB device.

In an embodiment, a first external electronic device 220 (e.g., an electronic device 102 in FIG. 1, and an external electronic device 220 in FIG. 2 or 4) may include a smart phone and/or a wearable device of a pedestrian (e.g., a child). The first external electronic device 220 may be a node UWB device, and may be a responder UWB device.

In an embodiment, a second external electronic device 500 (e.g., a second external electronic device 500 in FIG. 5) may include a smart phone and/or a wearable device of a driver riding in a vehicle. The second external electronic device 500 may be a tag UWB device, may be a requester UWB device, and may be a questioner UWB device.

In an embodiment, a third external electronic device 600 may include a smart phone and/or a wearable device of a driver riding in a vehicle. The third external electronic device 600 may be a tag UWB device and may be a requestor UWB device.

In FIG. 6, it will be assumed that the electronic device 101, the first external electronic device 220, the second external electronic device 500, and the third external electronic device 600 initiate the distance-based service and perform a UWB measurement operation.

In an embodiment, the electronic device 101 may identify that it is required to perform a UWB ranging operation with the first external electronic device 220. The electronic device 101 may transmit a UWB ranging request message 611 to the first external electronic device 220. The first external electronic device 220 may receive the UWB ranging request message 611 from the electronic device 101, and transmit, to the electronic device 101, a UWB ranging response message 613 which is a response message to the UWB ranging request message 611. The electronic device 101, which receives the UWB ranging response message 613 from the first external electronic device 220, may estimate a distance between the electronic device 101 and the first external electronic device based on the received UWB ranging response message 613. For example, the electronic device 101 may estimate time of flight (ToF) between the electronic device 101 and the first external electronic device 220 based on a time difference of arrival (TDoA) scheme, and estimate the distance between the electronic device 101 and the first external electronic device 220 based on the estimated ToF.

In an embodiment, UWB ranging information may include UWB ranging parameters related to a UWB ranging operation of a requestor UWB device and a responder UWB device and ToF between the requestor UWB device and the responder UWB device. In an embodiment, the UWB ranging parameters may include a ranging role parameter indicating a ranging role, a ranging slot index indicating a ranging slot in which the UWB ranging operation will be performed, and/or an ID of a UWB ranging message (e.g., a UWB ranging request message, and/or a UWB ranging response message).

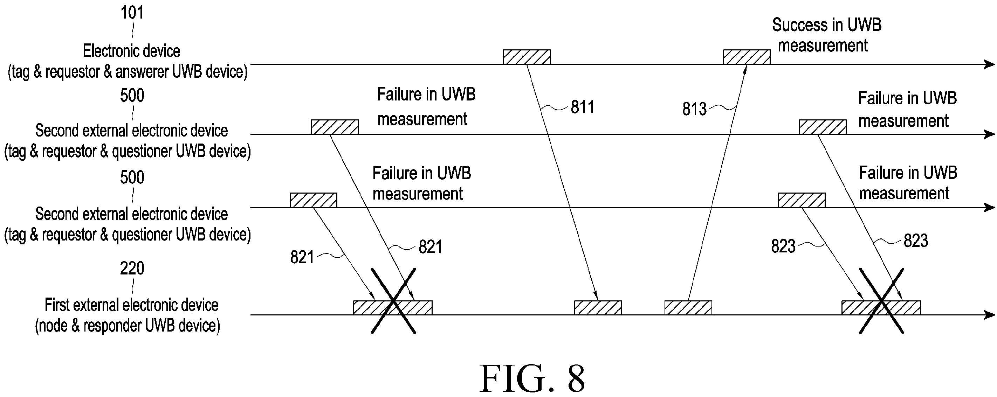

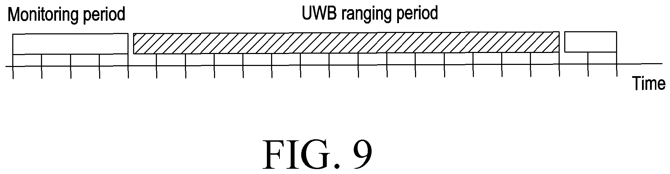

In an embodiment, the second external electronic device 500 may identify that it is required to perform a UWB ranging operation with the first external electronic device 220. The second external electronic device 500 may transmit a UWB ranging request message (not shown in FIG. 6) to the first external electronic device 220. However, due to various reasons, the second external electronic device 500 may not receive the UWB ranging response message, which is a response message to the UWB ranging request message, from the first external electronic device 220. In this case, the second external electronic device 500 may identify that information sharing is required to participate in the distance-based service. A scheme by which the second external electronic device 500 may identify that the information sharing is required (e.g., a scheme by which it may identify that a condition for information sharing is satisfied) may be implemented in various forms, the scheme by which the second external electronic device 500 may identify that the information sharing is required will be described in FIGS. 8 and 9, so a detailed description thereof will be omitted herein.

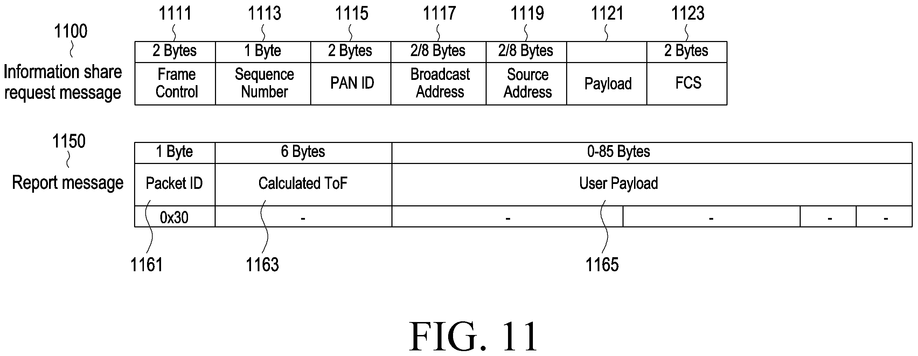

The second external electronic device 500, which identifies that the information sharing is required (for example, which identifies that the condition for information sharing is satisfied), may transmit (for example, broadcast) an information share request message 621. In an embodiment, the information share request message 621 may be a message requesting to share UWB ranging information, and a format of the information share request message 621 will be described in FIG. 11, so a detailed description thereof will be provided herein.

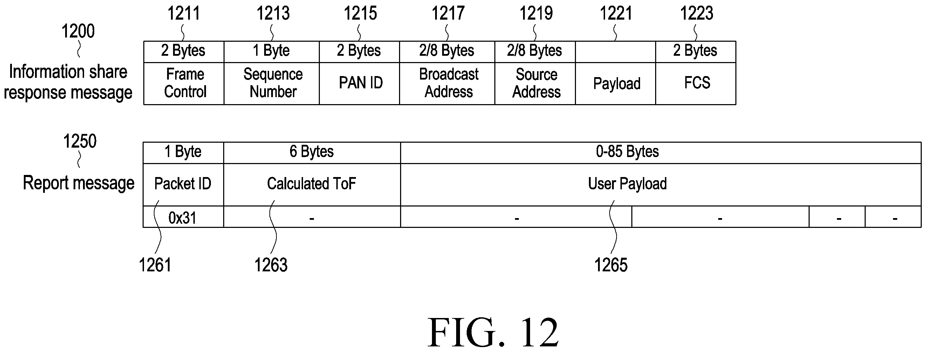

When receiving the information share request message 621 transmitted by the second external electronic device 500, the electronic device 101 may transmit an information share response message 623, which is a response message to the information share request message 621. In an embodiment, the electronic device 101 may transmit (for example, broadcast) the information share response message 623 including UWB ranging information stored by the electronic device 101 itself. In an embodiment, the electronic device 101 performed the UWB ranging operation with the first external electronic device 220, so the electronic device 101 may include the UWB ranging information related to the UWB ranging operation between the electronic device 101 and the first external electronic device 220 in the information share response message 623. A format of the information share response message 623 will be described in FIG. 12, so a detailed description thereof will be omitted herein.

Even though the second external electronic device 500, which receives the information share response message 623 transmitted by the electronic device 101, fails to perform the UWB ranging operation with the first external electronic device 220, the second external electronic device 500 may obtain the UWB ranging information related to the UWB ranging operation between the electronic device 101 and the first external electronic device 220 based on the information share response message 623. The second external electronic device 500 may participate in the distance-based service based on the obtained UWB ranging information.

In an embodiment, the third external electronic device 600 may identify that it is required to perform a UWB ranging operation with the first external electronic device 220. The third external electronic device 600 may transmit a UWB ranging request message 631 to the first external electronic device 220. The first external electronic device 220 may receive the UWB ranging request message 631 from the electronic device, and transmit a UWB ranging response message 633, which is a response message to the UWB ranging request message 631, to the third external electronic device 220. The third external electronic device 600, which receives the UWB ranging response message from the first external electronic device 220, may estimate a distance between the third external electronic device 600 and the first external electronic device 220 based on the received UWB ranging response message. For example, the third external electronic device 600 may estimate ToF between the third external electronic device 600 and the first external electronic device 220 based on the TDoA scheme, and estimate the distance between the third external electronic device 600 and the first external electronic device 220 based on the estimated ToF.

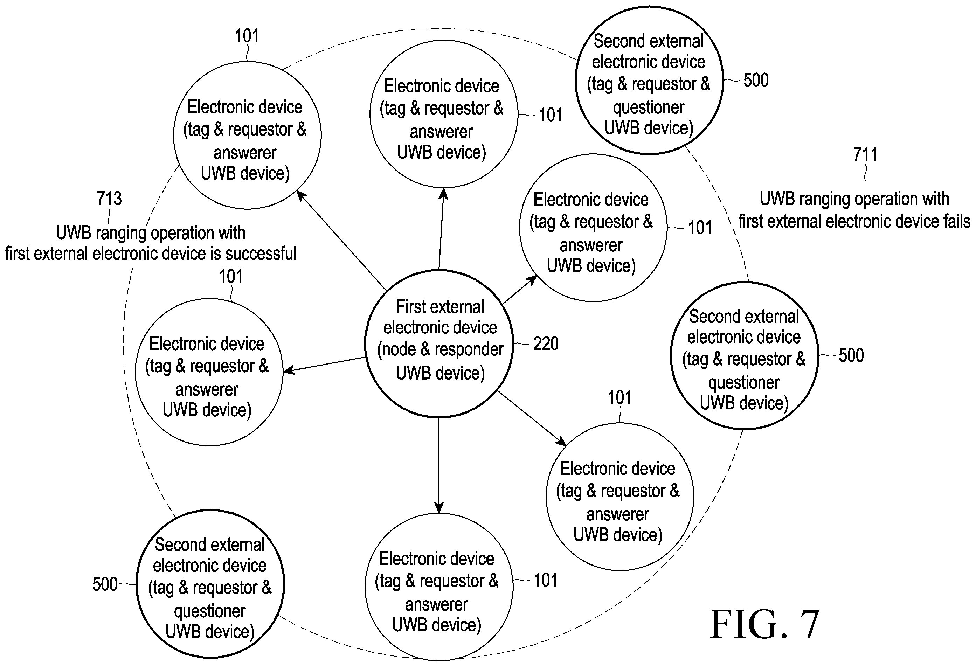

FIG. 7 is a diagram illustrating an operation of UWB devices according to a process for sharing UWB ranging information in a wireless communication network according to an embodiment.

Referring to FIG. 7, a distance-based service (e.g., an anonymous distance-based service) may include a pedestrian safety service (e.g., a service notifying a collision risk for child).

In an embodiment, an electronic device 101 (e.g., an electronic device 101 in FIG. 1, 2, or 3) may include a smart phone and/or a wearable device of a driver riding in a vehicle. The electronic device 101 may be a tag UWB device, may be a requester UWB device, and may be an answerer UWB device.

In an embodiment, a first external electronic device 220 (e.g., an electronic device 102 in FIG. 1, and an external electronic device 220 in FIG. 2 or 4) may include a smart phone and/or a wearable device of a pedestrian (e.g., a child). The first external electronic device 220 may be a node UWB device, and may be a responder UWB device.

In an embodiment, a second external electronic device 500 (e.g., a second external electronic device 500 in FIG. 5) may include a smart phone and/or a wearable device of a driver riding in a vehicle. The second external electronic device 500 may be a tag UWB device, may be a requester UWB device, and may be a questioner UWB device.

In FIG. 7, a plurality of electronic devices 101 are illustrated, but the plurality of electronic devices 101 may actually be one UWB device, and for convenience of a description, the plurality of electronic devices 101 are illustrated according to a location in a service area 700 (e.g., a distance-based service area) in the distance-based service. Alternatively, the plurality of electronic devices 101 may be different UWB devices, and if the plurality of electronic devices 101 are the different UWB devices, the plurality of electronic devices 101 may be a plurality of UWB devices whose locations are different in the distance-based service.

In FIG. 7, a plurality of second external electronic devices 500 are illustrated, but the plurality of second external electronic devices 500 may actually be one UWB device, and for convenience of a description, the plurality of second external electronic devices 500 are illustrated according to a location in the service area 700 in the distance-based service. Alternatively, the plurality of second external electronic devices 500 may be different UWB devices, and if the plurality of second external electronic devices 500 are the different UWB devices, the plurality of second external electronic devices 500 may be a plurality of UWB devices whose locations are different in the distance-based service.

In an embodiment, the electronic device 101 may identify that it is required to perform a UWB ranging operation with the first external electronic device 220. The electronic device 101 may transmit a UWB ranging request message to the first external electronic device 220. The first external electronic device 220 may receive the UWB ranging request message from the electronic device 101, and transmit, to the electronic device 101, a UWB ranging response message which is a response message to the UWB ranging request message. The electronic device 101, which receives the UWB ranging response message from the first external electronic device 220, may estimate a distance between the electronic device 101 and the first external electronic device based on the received UWB ranging response message (operation 713). For example, the electronic device 101 may estimate ToF between the electronic device 101 and the first external electronic device 220 based on a TDoA scheme, and estimate the distance between the electronic device 101 and the first external electronic device 220 based on the estimated ToF.

In an embodiment, the second external electronic device 500 may identify that it is required to perform a UWB ranging operation with the first external electronic device 220. The second external electronic device 500 may transmit a UWB ranging request message to the first external electronic device 220. However, due to various reasons, the second external electronic device 500 may not receive a UWB ranging response message, which is a response message to the UWB ranging request message, from the first external electronic device 220 (operation 711). In this case, the second external electronic device 500 may identify that information sharing is required to participate in the distance-based service. A scheme by which the second external electronic device 500 may identify that the information sharing is required may be implemented in various forms, the scheme by which the second external electronic device 500 may identify that the information sharing is required will be described in FIGS. 8 and 9, so a detailed description thereof will be omitted herein.

The second external electronic device 500, which identifies that the information sharing is required, may transmit (for example, broadcast) an information share request message. In an embodiment, a format of the information share request message will be described in FIG. 11, so a detailed description thereof will be provided herein. When receiving the information share request message transmitted by the second external electronic device 500, the electronic device 101 may transmit an information share response message, which is a response message to the information share request message. In an embodiment, the electronic device 101 may transmit (for example, broadcast) the information share response message including UWB ranging information stored by the electronic device 101 itself. In an embodiment, the electronic device 101 performed the UWB ranging operation with the first external electronic device 220, so the electronic device 101 may include the UWB ranging information related to the UWB ranging operation between the electronic device 101 and the first external electronic device 220 in the information share response message. A format of the information share response message will be described in FIG. 12, so a detailed description thereof will be omitted herein.

Even though the second external electronic device 500, which receives the information share response message transmitted by the electronic device 101, fails to perform the UWB ranging operation with the first external electronic device 220, the second external electronic device 500 may obtain the UWB ranging information related to the UWB ranging operation between the electronic device 101 and the first external electronic device 220 based on the information share response message. The second external electronic device 500 may participate in the distance-based service based on the obtained UWB ranging information.

As illustrated in FIG. 7, even though a UWB device fails a UWB ranging operation in the service area 700 of the distance-based service, if there is at least one neighbor UWB device which stores UWB ranging information among neighbor UWB devices around the UWB device, the UWB device may obtain the UWB ranging information from the at least one neighbor UWB device. The UWB device, which obtains the UWB ranging information from the at least one neighbor UWB device, may participate in the distance-based service based on the obtained UWB ranging information even though the UWB ranging operation fails.

FIG. 8 is a diagram illustrating an example of a scheme for identifying a need for information sharing in a wireless communication network according to an embodiment.

Referring to FIG. 8, a distance-based service (e.g., an anonymous distance-based service) may include a pedestrian safety service (e.g., a service notifying a collision risk for child).

In an embodiment, an electronic device 101 (e.g., an electronic device 101 in FIG. 1, 2, or 3) may include a smart phone and/or a wearable device of a driver riding in a vehicle. The electronic device 101 may be a tag UWB device, may be a requester UWB device, and may be an answerer UWB device.

In an embodiment, a first external electronic device 220 (e.g., an electronic device 102 in FIG. 1, and an external electronic device 220 in FIG. 2 or 4) may include a smart phone and/or a wearable device of a pedestrian (e.g., a child). The first external electronic device 220 may be a node UWB device, and may be a responder UWB device.

In an embodiment, a second external electronic device 500 (e.g., a second external electronic device 500 in FIG. 5) may include a smart phone and/or a wearable device of a driver riding in a vehicle. The second external electronic device 500 may be a tag UWB device, may be a requester UWB device, and may be a questioner UWB device.

In FIG. 8, a plurality of second external electronic devices 500 are illustrated, but the plurality of second external electronic devices 500 may actually be one UWB device, and for convenience of a description, the plurality of second external electronic device 500 is illustrated according to a location in the service area in the distance-based service. Alternatively, the plurality of second external electronic devices 500 may be different UWB devices, and if the plurality of second external electronic devices 500 are the different UWB devices, the plurality of second external electronic devices 500 may be a plurality of UWB devices whose locations are different in the distance-based service.

In an embodiment, the electronic device 101 may identify that it is required to perform a UWB ranging operation with the first external electronic device 220. The electronic device 101 may transmit a UWB ranging request message 811 to the first external electronic device 220. The first external electronic device 220 may receive the UWB ranging request message 811 from the electronic device 101, and transmit, to the electronic device 101, a UWB ranging response message 813 which is a response message to the UWB ranging request message 811. The electronic device 101, which receives the UWB ranging response message 813 from the first external electronic device 220, may estimate a distance between the electronic device 101 and the first external electronic device based on the received UWB ranging response message 813 (success in UWB measurement). For example, the electronic device 101 may estimate ToF between the electronic device 101 and the first external electronic device 220 based on a TDoA scheme, and estimate the distance between the electronic device 101 and the first external electronic device 220 based on the estimated ToF.

In an embodiment, the second external electronic device 500 may identify that it is required to perform a UWB ranging operation with the first external electronic device 220. The second external electronic device 500 may transmit a UWB ranging request message 821 to the first external electronic device 220. However, due to various reasons, the second external electronic device 500 may not receive a UWB ranging response message, which is a response message to the UWB ranging request message 821, from the first external electronic device 220 (failure in UWB measurement). For example, even though the second external electronic device 500 transmits the UWB ranging request message 821 to the first external electronic device 220, the first external electronic device 220 may not receive the UWB ranging request message 821 transmitted from the second external electronic device 500 if the second external electronic device 500 exists outside a UWB ranging area, or if there is an obstacle between the second external electronic device 500 and the first external electronic device 220, or if a collision occurs between a UWB ranging request message of another UWB device which performs a UWB operation with the first external electronic device 220 and the UWB ranging request message 821 transmitted from the second external electronic device 500.

When the second external electronic device 500 may not receive a UWB ranging response message, which is a response message to the UWB ranging request message 821, from the first external electronic device 220, the second external electronic device 500 may transmit a UWB ranging request message 823 again. However, due to various reasons, the second external electronic device 500 may not receive a UWB ranging response message, which is a response message to the UWB ranging request message 823, from the first external electronic device 220 (failure in UWB measurement). Cases that the second external electronic device 500 may not receive the UWB ranging response message, which is a response message to the UWB ranging request message 823, may be similar to or substantially the same as cases that the second external electronic device 500 may not receive the UWB ranging response message, which is the response message to the UWB ranging request message 821, so a detailed description thereof will be omitted herein.

If the UWB ranging response message is not received in response to the UWB ranging request messages 821 and 823 transmitted to the first external electronic device 220, the second external electronic device 500 may identify that the UWB measurement fails, and then identify that information sharing is required to participate in the distance-based service. In an embodiment, a scheme to identify that information sharing is required may be a scheme to identify that information sharing is required in a case that a requester & questioner UWB device transmits a UWB ranging request message and then does not receive a UWB ranging response message in response to the UWB ranging request message.

In FIG. 8, a case that the second external electronic device 500 identifies that the information sharing is required to participate in the distance-based service if the second external electronic device 500 does not receive the UWB response message from the first external electronic device 220 after transmitting the UWB ranging request messages 821 and 823 twice to the first external electronic device 220 has been described as an example, but the second external electronic device 500 may also identify that the information sharing is required to participate in the distance-based service if the second external electronic device 500 does not receive the UWB response message from the first external electronic device 220 after transmitting the ranging request message 821 once to the first external electronic device 220.

In the scheme of identifying that the information sharing is required according to an embodiment, the questioner UWB device may identify that the information sharing is required if the questioner UWB device does not receive the UWB ranging response message in response to the UWB ranging request message after transmitting the UWB ranging request message N times. In an embodiment, N may be an integer greater than or equal to 1, and may be set to a value less than or equal to M set in the distance-based service.

FIG. 9 is a diagram illustrating another example of a scheme for identifying a need for information sharing in a wireless communication network according to an embodiment.

Referring to FIG. 9, a distance-based service (e.g., an anonymous distance-based service) may include a pedestrian safety service (e.g., a service notifying a collision risk for child).

In an embodiment, an electronic device (e.g., an electronic device 101 in FIG. 1, 2, or 3) may include a smart phone and/or a wearable device of a driver riding in a vehicle. The electronic device may be a tag UWB device, may be a requester UWB device, and may be an answerer UWB device.

In an embodiment, a first external electronic device (e.g., an electronic device 102 in FIG. 1, and an external electronic device 220 in FIG. 2 or 4) may include a smart phone and/or a wearable device of a pedestrian (e.g., a child). The first external electronic device may be a node UWB device, and may be a responder UWB device.

In an embodiment, a second external electronic device (e.g., a second external electronic device 500 in FIG. 5) may include a smart phone and/or a wearable device of a driver riding in a vehicle. The second external electronic device may be a tag UWB device, may be a requester UWB device, and may be a questioner UWB device.

In FIG. 9, a UWB ranging period may be a period in which it is possible to transmit a UWB ranging request message for a UWB measurement operation, and a monitoring period may be a period in which it is possible to receive a UWB ranging response message which is a response message to the UWB ranging request message.

Due to various reasons, the second external electronic device may not obtain an opportunity to transmit a UWB ranging request message in the UWB ranging period, and/or may not obtain an opportunity to receive a UWB ranging response message in the monitoring period.

In an embodiment, in the UWB ranging period, if other UWB devices (e.g., an electronic device) except for the second external electronic device transmit UWB ranging request messages, a wireless channel may be occupied by the other UWB devices, and in this case, the second external electronic device may not obtain an opportunity to transmit a UWB ranging request message due to the wireless channel being occupied by the other UWB devices. When the second external electronic device may not obtain the opportunity to transmit the UWB ranging request message in the UWB ranging period, the second external electronic device may identify that the information sharing is required to participate in the distance-based service.

In an embodiment, in the monitoring period, if the other UWB devices (e.g., the electronic device) except for the second external electronic device receive UWB ranging response messages, a wireless channel may be occupied by the other UWB devices, and in this case, the second external electronic device may not obtain an opportunity to receive a UWB ranging response message due to the wireless channel being occupied by the other UWB devices. When the second external electronic device may not obtain the opportunity to receive the UWB ranging response message in the monitoring period, the second external electronic device may identify that the information sharing is required to participate in the distance-based service.

In FIG. 9, a case that the second external electronic device identifies that the information sharing is required to participate in the distance-based service when the second external electronic device may not obtain the opportunity to receive the UWB ranging response message in the monitoring period has been described as an example, but the second external electronic device may identify that the information sharing is required to participate in the distance-based service when the second external electronic device may not obtain the opportunity to receive the UWB ranging response message in N monitoring periods. In an embodiment, N may be an integer greater than or equal to 1, and may be set to a value less than or equal to M set in the distance-based service.

In FIG. 9, a case that the second external electronic device identifies that the information sharing is required to participate in the distance-based service when the second external electronic device may not obtain the opportunity to transmit the UWB ranging request message in the UWB ranging period has been described as an example, but the second external electronic device may identify that the information sharing is required to participate in the distance-based service when the second external electronic device may not obtain the opportunity to transmit the UWB ranging request message in N UWB ranging periods.

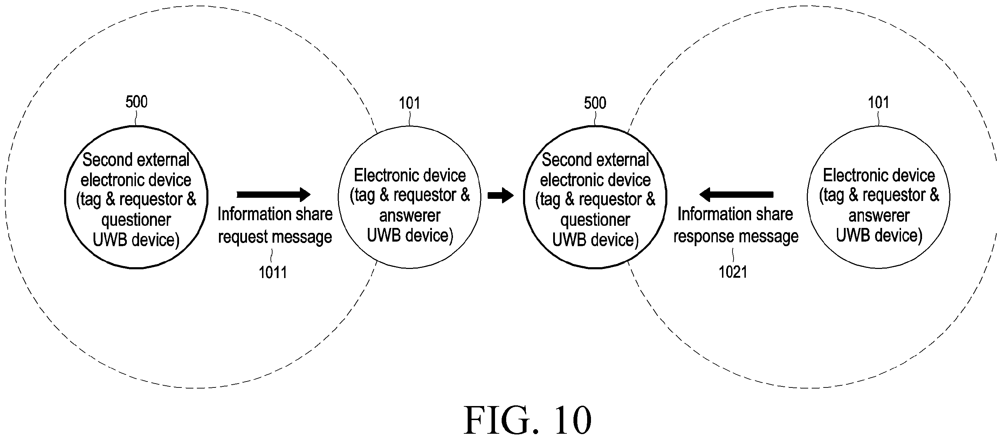

FIG. 10 is a diagram illustrating an example of an operation of UWB devices according to a process for sharing UWB ranging information in a wireless communication network according to an embodiment.

Referring to FIG. 10, a distance-based service (e.g., an anonymous distance-based service) may include a pedestrian safety service (e.g., a service notifying a collision risk for child).

In an embodiment, an electronic device 101 (e.g., an electronic device 101 in FIG. 1, 2, or 3) may include a smart phone and/or a wearable device of a driver riding in a vehicle. The electronic device 101 may be a tag UWB device, may be a requester UWB device, and may be an answerer UWB device.

In an embodiment, a first external electronic device (not shown in FIG. 10) (e.g., an electronic device 102 in FIG. 1, and an external electronic device 220 in FIG. 2 or 4) may include a smart phone and/or a wearable device of a pedestrian (e.g., a child). The first external electronic device may be a node UWB device, and may be a responder UWB device.

In an embodiment, a second external electronic device 500 (e.g., a second external electronic device 500 in FIG. 5) may include a smart phone and/or a wearable device of a driver riding in a vehicle. The second external electronic device 500 may be a tag UWB device, may be a requester UWB device, and may be a questioner UWB device.

In FIG. 10, it may be assumed that the electronic device 101, the first external electronic device, and the second external electronic device 500 initiate the distance-based service, and perform a UWB measurement operation.

In an embodiment, the second external electronic device 500 may identify that it is required to perform a UWB ranging operation with the first external electronic device. The second external electronic device 500 may transmit a UWB ranging request message (not shown in FIG. 10) to the first external electronic device. However, due to various reasons, the second external electronic device 500 may not receive a UWB ranging response message, which is a response message to the UWB ranging request message, from the first external electronic device, and may identify that information sharing is required to participate in the distance-based service. A scheme for the second external electronic device 500 to identify that the information sharing is required may be implemented be implemented similarly to or substantially the same as described in FIGS. 8 and/or 9, so a detailed description thereof will be omitted herein.

The second external electronic device 500, which identifies that the information sharing is required, may transmit (for example, broadcast) an information share request message 1011. In an embodiment, the information share request message 1011 may be a message requesting to share UWB ranging information, and a format of the information share request message 1011 will be described in FIG. 11, so a detailed description thereof will be provided herein.

When receiving the information share request message 1011 transmitted by the second external electronic device 500, the electronic device 101 may transmit an information share response message 1021, which is a response message to the information share request message 1011. In an embodiment, the electronic device 101 may transmit (for example, broadcast) the information share response message 1021 including UWB ranging information stored by the electronic device 101 itself. In an embodiment, the electronic device 101 performed the UWB ranging operation with the first external electronic device, so the electronic device 101 may include the UWB ranging information related to the UWB ranging operation between the electronic device 101 and the first external electronic device in the information share response message 1021. A format of the information share response message 1021 will be described in FIG. 12, so a detailed description thereof will be omitted herein.

Even though the second external electronic device 500, which receives the information share response message 1021 transmitted by the electronic device 101, fails to perform the UWB ranging operation with the first external electronic device, the second external electronic device 500 may obtain the UWB ranging information related to the UWB ranging operation between the electronic device 101 and the first external electronic device based on the information share response message 1021. The second external electronic device 500 may participate in the distance-based service based on the obtained UWB ranging information.

In an embodiment, the information share response message 1021 may be transmitted based on a broadcast scheme. Therefore, other UWB devices other than the second external electronic device 500 which transmits the information share request message 1011 may also receive the information share response message 1021, but the corresponding UWB devices have never transmitted the information share response message 1021, so the corresponding UWB devices may not perform any additional operation for the received information share response message 1021 and discard or ignore the received information share response message 1021. According to an embodiment, the second external electronic device 500 may obtain the UWB ranging information via the electronic device 101, and thus may obtain the UWB ranging information without using a separate additional radio resource.

FIG. 11 is a diagram illustrating an example of a format of an information sharing request message in a wireless communication network according to an embodiment.

Referring to FIG. 11, an information share request message 1100 may be implemented in a form of a report message and may be implemented as a frame specified in an IEEE 802.15.4/4z standard. In an embodiment, the information share request message 1100 may be implemented as a medium access control (MAC) frame.

In an embodiment, the information share request message 1100 may include a frame control field 1111, a sequence number field 1113, and a personal area network (PAN) identifier (ID) field 1115, a destination address field 1117, a source address field 1119, a payload field 1121, and/or a frame check sequence (FCS) field 1123.

In an embodiment, the frame control field 1111 may include information related to configuration of the information share request message 1100. For example, the frame control field 1111 may be implemented with 2 bytes.

In an embodiment, the sequence number field 1113 may include a sequence number of the information share request message 1100. For example, the sequence number field 1113 may be implemented with 1 byte.

In an embodiment, the PAN ID field 1115 may include an ID of a PAN to which a UWB device (e.g., a questioner UWB device) transmitting the information share request message 1100 belongs. For example, the PAN ID field 1115 may be implemented with 2 bytes.

In an embodiment, the destination address field 1117 may include an address of a UWB device which will receive the information share request message 1100. In an embodiment, the destination address field 1117 may include a broadcast address set in the information share request message 1100. For example, the destination address field 1117 may be implemented with 2 bytes or 8 bytes.

In an embodiment, the source address field 1119 may include an address of the UWB device transmitting the information share request message 1100. In an embodiment, the address of the UWB device transmitting the information share request message 1100 may include a MAC address of the UWB device transmitting the information share request message 1100. For example, the source address field 1119 may be implemented with 2 bytes or 8 bytes.

In an embodiment, the payload field 1121 may include information related to a distance-based service (e.g., UWB ranging information). In an embodiment, the UWB ranging information may include UWB ranging parameters related to a UWB ranging operation of a requestor UWB device and a responder UWB device and ToF between the requestor UWB device and the responder UWB device. In an embodiment, the UWB ranging parameters may include a ranging role parameter indicating a ranging role, a ranging slot index indicating a ranging slot in which the UWB ranging operation will be performed, and/or an ID of a UWB ranging message (e.g., a UWB ranging request message and/or a UWB ranging response message). In an embodiment, the payload field 1121 may have a variable size. In an embodiment, it is assumed that the information share request message 1100 is implemented as the report message, so the payload field 1121 may include a report message 1150. If the information share request message 1100 is implemented as a message other than the report message, the payload field 1121 may include the corresponding message.

In an embodiment, the report message 1150 may include a packet ID field 1161, a calculated ToF field 1163, and a user payload field 1165.

In an embodiment, the packet ID field 1161 may include a packet ID of the report message 1150. In an embodiment, the packet ID included in the packet ID field 1161 may indicate that the corresponding packet is the information share request message 1100. For example, the packet ID field 1161 may be implemented with 1 byte. A case that the packet ID of the report message 1150 is '0x30' is shown in FIG. 11. In an embodiment, a UWB device which receives the information share request message 1100 including the packet ID whose value is '0x30' may identify that the corresponding packet is the information share request message 1100.

In an embodiment, the calculated ToF field 1163 may include a dummy value. In an embodiment, the calculated ToF field 1163 may include an estimated (or calculated) ToF between UWB devices if the report message 1150 is used as a general report message, but if the report message 1150 is used as the information share request message 1100, there is no ToF which will be actually reported, so the calculated ToF field 1163 may include the dummy value. For example, the calculated ToF field 1163 may be implemented with 6 bytes.

In an embodiment, the user payload field 1165 may include a dummy value. In an embodiment, the user payload field 1165 may include information related to UWB ranging if it is used as a general report message, but if the report message 1150 is used as the information share request message 1100, there is no information related to UWB ranging which will be actually reported, so the user payload field 1165 may include the dummy value. For example, the user payload field 1165 may have a variable size and may be implemented with up to 85 bytes.

In an embodiment, the FCS field 1123 may include information for checking presence or absence of an error in the corresponding frame (e.g., the information share request message 1100). For example, the FCS field 1123 may be implemented with 2 bytes.

FIG. 12 is a diagram illustrating an example of a format of an information sharing response message in a wireless communication network according to an embodiment.

Referring to FIG. 12, an information share response message 1200 may be implemented in a form of a report message and may be implemented as a frame specified in an IEEE 802.15.4/4z standard. In an embodiment, the information share response message 1200 may be implemented as a MAC frame.

In an embodiment, the information share response message 1200 may include a frame control field 1211, a sequence number field 1213, a PAN ID field 1215, a destination address field 1217, a source address field 1219, a payload field 1221, and/or an FCS field 1223.

In an embodiment, the frame control field 1211 may include information related to configuration of the information share response message 1200. For example, the frame control field 1211 may be implemented with 2 bytes.

In an embodiment, the sequence number field 1213 may include a sequence number of the information share response message 1200. For example, the sequence number field 1213 may be implemented with 1 byte.

In an embodiment, the PAN ID field 1215 may include an ID of a PAN to which a UWB device (e.g., an answerer UWB device) transmitting the information share response message 1200 belongs. For example, the PAN ID field 1215 may be implemented with 2 bytes.

In an embodiment, the destination address field 1217 may include an address of a UWB device which will receive the information share response message 1200. In an embodiment, the destination address field 1217 may include a broadcast address set in the information share response message 1200. For example, the destination address field 1217 may be implemented with 2 bytes or 8 bytes.

In an embodiment, the source address field 1219 may include an address of the UWB device transmitting the information share response message 1200. In an embodiment, the address of the UWB device transmitting the information share response message 1200 may include a MAC address of the UWB device transmitting the information share response message 1200. For example, the source address field 1219 may be implemented with 2 bytes or 8 bytes.

In an embodiment, the payload field 1221 may include information (e.g., UWB ranging information) related to a distance-based service. In an embodiment, the UWB ranging information may be similar to or substantially the same as that described in FIG. 11, so a detailed description thereof will be omitted herein. In an embodiment, the payload field 1221 may have a variable size. In an embodiment, it is assumed that the information share response message 1200 is implemented as the report message, so the payload field 1221 may include a report message 1250. If the information share response message 1200 is implemented as a message other than the report message, the payload field 1221 may include the corresponding message.

In an embodiment, the report message 1250 may include a packet ID field 1261, a calculated ToF field 1263, and a user payload field 1265.

In an embodiment, the packet ID field 1261 may include a packet ID of the report message 1250. In an embodiment, the packet ID included in the packet ID field 1261 may indicate that the corresponding packet is the information share response message 1200. For example, the packet ID field 1261 may be implemented with 1 byte. A case that the packet ID of the report message 1250 is '0x31' is shown in FIG. 12. In an embodiment, a UWB device which receives the information share response message 1200 including the packet ID whose value is '0x31' may identify that the corresponding packet is the information share response message 1200.

In an embodiment, the calculated ToF field 1263 may include an estimated (or calculated) ToF between UWB devices included in UWB ranging information. For example, the calculated ToF field 1263 may be implemented with 6 bytes.

In an embodiment, the user payload field 1265 may include remaining information (e.g., UWB ranging parameters) except for the estimated (or calculated) ToF between the UWB devices among the UWB ranging information. For example, the user payload field 1265 may have a variable size and may be implemented with up to 85 bytes.

In an embodiment, the FCS field 1223 may include information for checking presence or absence of an error in the corresponding frame (e.g., the information share response message 1200). For example, the FCS field 1223 may be implemented with 2 bytes.

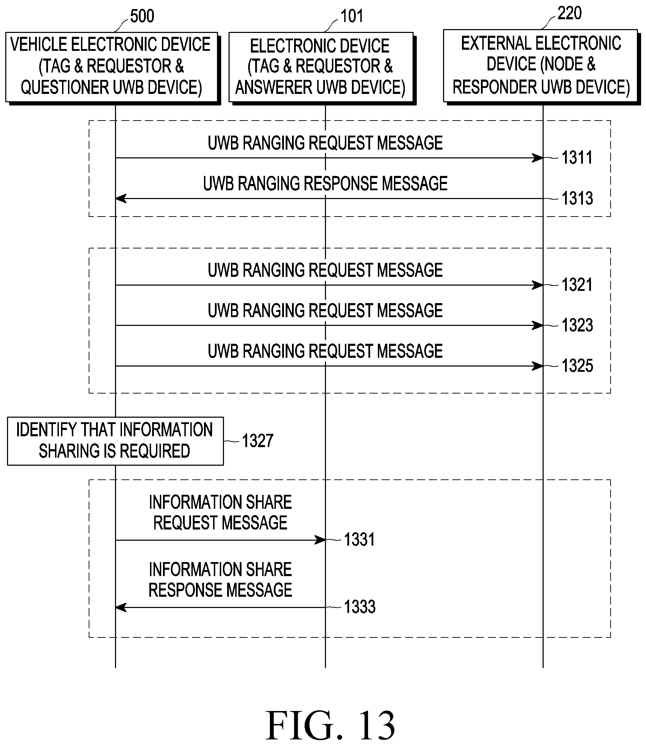

FIG. 13 is a diagram illustrating another example of a process for sharing UWB ranging information in a wireless communication network according to an embodiment.

Referring to FIG. 13, a distance-based service (e.g., an anonymous distance-based service) may include a pedestrian safety service (e.g., a service notifying a collision risk for child).

In an embodiment, an electronic device 101 (e.g., an electronic device 101 in FIG. 1, 2, or 3) may include a smart phone and/or a wearable device of a driver riding in a vehicle. The electronic device 101 may be a tag UWB device, may be a requester UWB device, and may be an answerer UWB device.

In an embodiment, a first external electronic device 220 (e.g., an electronic device 102 in FIG. 1, and an external electronic device 220 in FIG. 2 or 4) may include a smart phone and/or a wearable device of a pedestrian (e.g., a child). The first external electronic device 220 may be a node UWB device, and may be a responder UWB device.

In an embodiment, a second external electronic device 500 (e.g., a second external electronic device 500 in FIG. 5) may include a smart phone and/or a wearable device of a driver riding in a vehicle. The second external electronic device 500 may be a tag UWB device, may be a requester UWB device, and may be a questioner UWB device.

In FIG. 13, it will be assumed that the electronic device 101, the first external electronic device 220, and the second external electronic device 500 initiate the distance-based service and perform a UWB measurement operation.

In an embodiment, the electronic device 101 may identify that it is required to perform a UWB ranging operation with the first external electronic device 220. The electronic device 101 may transmit a UWB ranging request message 1311 to the first external electronic device 220. The first external electronic device 220 may receive the UWB ranging request message 1311 from the electronic device 101, and transmit, to the electronic device 101, a UWB ranging response message 1313 which is a response message to the UWB ranging request message 1311. The electronic device 101, which receives the UWB ranging response message 1313 from the first external electronic device 220, may estimate a distance between the electronic device 101 and the first external electronic device based on the received UWB ranging response message 1313. For example, the electronic device 101 may estimate ToF between the electronic device 101 and the first external electronic device 220 based on a TDoA scheme, and estimate the distance between the electronic device 101 and the first external electronic device 220 based on the estimated ToF.

In an embodiment, UWB ranging information may include UWB ranging parameters related to a UWB ranging operation of a requestor UWB device and a responder UWB device and ToF between the requestor UWB device and the responder UWB device. In an embodiment, the UWB ranging parameters may include a ranging role parameter indicating a ranging role, a ranging slot index indicating a ranging slot in which the UWB ranging operation will be performed, and/or an ID of a UWB ranging message (e.g., a UWB ranging request message, and/or a UWB ranging response message).

In an embodiment, the second external electronic device 500 may identify that it is required to perform a UWB ranging operation with the first external electronic device 220. The second external electronic device 500 may transmit a UWB ranging request message 1321 to the first external electronic device 220. However, due to various reasons, the second external electronic device 500 may not receive the UWB ranging response message 1321, which is a response message to the UWB ranging request message, from the first external electronic device 220.

The second external electronic device 500, which does not receive the UWB ranging response message in response to the UWB ranging request message 1321, may transmit a UWB ranging request message 1323 to the first external electronic device 220. The maximum number of retransmissions for a UWB ranging request message may be set to suit a situation of a wireless communication network, and in FIG. 13, it will be assumed that the maximum number of retransmissions for the UWB ranging request message is set to 3. However, due to various reasons, the second external electronic device 500 may not receive the UWB ranging response message, which is a response message to the UWB ranging request message 1323, from the first external electronic device 220.

It has not reached three times, which is the maximum number of retransmissions for the UWB ranging request message, so the second external electronic device 500, which does not receive the UWB ranging response message in response to the UWB ranging request message 1323, may transmit a UWB ranging request message 1325 to the first external electronic device 220. However, due to various reasons, the second external electronic device 500 may not receive a UWB ranging response message, which is a response message to the UWB ranging request message 1325, from the first external electronic device 220. If the UWB ranging response message is not received from the first external electronic device 220 despite repeatedly transmitting the UWB ranging request message three times, which is the maximum number of retransmissions for the UWB ranging request message, the second external electronic device 500 may identify that information sharing is required to participate in the distance-based service in operation 1327. A scheme by which the second external electronic device 500 may identify that the information sharing is required may be implemented in various forms, and the scheme by which the second external electronic device 500 may identify that the information sharing is required may be similar to or substantially the same as schemes described in FIG. 8 and/or FIG. 9, so a detailed description thereof will be omitted herein.

The second external electronic device 500, which identifies that the information sharing is required, may transmit (for example, broadcast) an information share request message 1331 requesting to share UWB ranging information. In an embodiment, a format of the information share request message 1331 may be implemented similarly to or substantially the same as a format of an information share request message 1100 described in FIG. 11, so a detailed description thereof will be omitted herein.

When receiving the information share request message 1331 transmitted by the second external electronic device 500, the electronic device 101 may transmit an information share response message 1333, which is a response message to the information share request message 1331. In an embodiment, the electronic device 101 may transmit (for example, broadcast) the information share response message 1333 including UWB ranging information stored by the electronic device 101 itself. In an embodiment, the electronic device 101 performed the UWB ranging operation with the first external electronic device 220, so the electronic device 101 may include the UWB ranging information related to the UWB ranging operation between the electronic device 101 and the first external electronic device 220 in the information share response message 1333. A format of the information share response message 1333 may be implemented similarly to or substantially the same as an information share response message 1200 described in FIG. 12, so a detailed description thereof will be omitted herein.

Even though the second external electronic device 500, which receives the information share response message 1333 transmitted by the electronic device 101, fails to perform the UWB ranging operation with the first external electronic device 220, the second external electronic device 500 may obtain the UWB ranging information related to the UWB ranging operation between the electronic device 101 and the first external electronic device 220 based on the information share response message 1333. The second external electronic device 500 may participate in the distance-based service based on the obtained UWB ranging information.

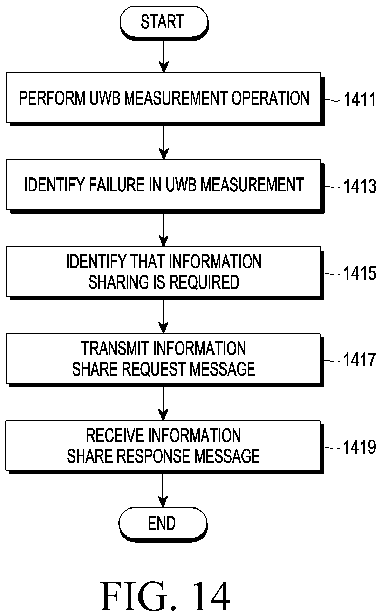

FIG. 14 is a diagram illustrating an example of an operating process of a second external electronic device in a wireless communication network according to an embodiment.

Referring to FIG. 14, a distance-based service (e.g., an anonymous distance-based service) may include a pedestrian safety service (e.g., a service notifying a collision risk for child).

In an embodiment, an electronic device (e.g., an electronic device 101 in FIG. 1, 2, or 3) may include a smart phone and/or a wearable device of a driver riding in a vehicle. The electronic device may be a tag UWB device, may be a requester UWB device, and may be an answerer UWB device.

In an embodiment, a first external electronic device (e.g., an electronic device 102 in FIG. 1, and an external electronic device 220 in FIG. 2 or 4) may include a smart phone and/or a wearable device of a pedestrian (e.g., a child). The first external electronic device may be a node UWB device, and may be a responder UWB device.

In an embodiment, a second external electronic device (e.g., a second external electronic device 500 in FIG. 5) may include a smart phone and/or a wearable device of a driver riding in a vehicle. The second external electronic device may be a tag UWB device, may be a requester UWB device, and may be a questioner UWB device.

In FIG. 14, it will be assumed that the electronic device, the first external electronic device, and the second external electronic device initiate the distance-based service and perform a UWB measurement operation.

In operation 1411, the second external electronic device may perform a UWB measurement operation with the first external electronic device. In operation 1413, the second external electronic device may identify a failure in UWB measurement. For example, even though the second external electronic device transmits the UWB ranging request message to the first external electronic device, if the second external electronic device does not receive a UWB ranging response message, which is a response message to the UWB ranging request message, from the first external electronic device, the second external electronic device may identify the failure in the UWB measurement. When identifying the failure in the UWB measurement, the second external electronic device may identify that information sharing is required to participate in the distance-based service in operation 1415. A scheme by which the second external electronic device identifies a need for the information sharing may be implemented in various forms, and the scheme by which the second external electronic device identifies the need for the information sharing may be similar to or substantially the same as a scheme described in FIG. 8 and/or FIG. 9, so a detailed description thereof will be omitted herein.

The second external electronic device, which identifies the need for the information sharing, may transmit (for example, broadcast) an information share request message requesting to share UWB ranging information in operation 1417. In an embodiment, a format of the information share request message may be implemented similarly to or substantially the same as a format of an information share request message 1100 described in FIG. 11, so a detailed description thereof will be omitted herein.

In operation 1419, the second external electronic device may receive an information share response message, which is a response message to the information share request message, from the electronic device. In an embodiment, the information share response message transmitted by the electronic device may include UWB ranging information stored by the electronic device itself. In an embodiment, the electronic device performed the UWB ranging operation with the first external electronic device, so the electronic device may include the UWB ranging information related to the UWB ranging operation between the electronic device and the first external electronic device in the information share response message. A format of the information share response message may be implemented similarly to or substantially the same as an information share response message 1200 described in FIG. 12, so a detailed description thereof will be omitted herein. Even though the second external electronic device, which receives the information share response message transmitted by the electronic device, fails to perform the UWB ranging operation with the first external electronic device 220, the second external electronic device may obtain the UWB ranging information related to the UWB ranging operation between the electronic device and the first external electronic device based on the information share response message. The second external electronic device may participate in the distance-based service based on the obtained UWB ranging information.

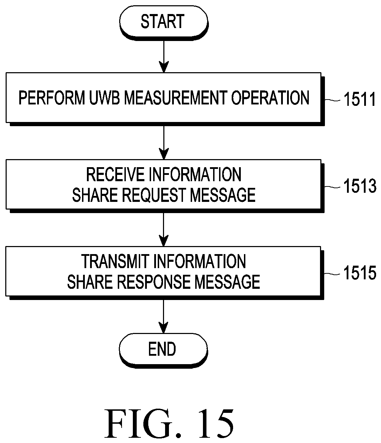

FIG. 15 is a diagram illustrating an example of an operating process of an electronic device in a wireless communication network according to an embodiment.

Referring to FIG. 15, a distance-based service (e.g., an anonymous distance-based service) may include a pedestrian safety service (e.g., a service notifying a collision risk for child).

In an embodiment, an electronic device (e.g., an electronic device 101 in FIG. 1, 2, or 3) may include a smart phone and/or a wearable device of a driver riding in a vehicle. The electronic device may be a tag UWB device, may be a requester UWB device, and may be an answerer UWB device.

In an embodiment, a first external electronic device (e.g., an electronic device 102 in FIG. 1, and an external electronic device 220 in FIG. 2 or 4) may include a smart phone and/or a wearable device of a pedestrian (e.g., a child). The first external electronic device may be a node UWB device, and may be a responder UWB device.

In an embodiment, a second external electronic device (e.g., a second external electronic device 500 in FIG. 5) may include a smart phone and/or a wearable device of a driver riding in a vehicle. The second external electronic device may be a tag UWB device, may be a requester UWB device, and may be a questioner UWB device.

In FIG. 15, it will be assumed that the electronic device, the first external electronic device, and the second external electronic device initiate the distance-based service and perform a UWB measurement operation.

In operation 1511, the electronic device may perform a UWB measurement operation with the first external electronic device. As the electronic device performs the UWB measurement operation with the first external electronic device, the electronic device may transmit a UWB ranging request message to the first external electronic device, and receive a UWB ranging response message, which is a response message to the UWB ranging request message, from the first external electronic device. The electronic device, which receives the UWB ranging response message from the first external electronic device, may estimate a distance between the electronic device and the first external electronic device based on the received UWB ranging response message. For example, the electronic device may estimate ToF between the electronic device and the first external electronic device based on a TDoA scheme, and may estimate the distance between the electronic device and the first external electronic device based on the estimated ToF.

The electronic device, which performs the UWB measurement operation with the first external electronic device, may receive an information share request message requesting to share UWB ranging information in operation 1513. In an embodiment, a format of the information share request message may be implemented similarly to or substantially the same as a format of an information share request message 1100 described in FIG. 11, so a detailed description thereof will be omitted herein. In an embodiment, it will be assumed that the information share request message is transmitted by the second external electronic device which fails in the UWB measurement operation with the first external electronic device.

The electronic device, which receives the information share request message, may transmit (for example, broadcast) an information share response message including UWB ranging information stored by the electronic device itself in operation 1515. In an embodiment, a format of the information share response message may be implemented similarly to or substantially the same as an information share response message 1200 described in FIG. 12, so a detailed description thereof will be omitted herein. As the electronic device transmits the information share response message including the UWB ranging information, the second external electronic device, which fails in the UWB measurement operation with the first external electronic device, may obtain the UWB ranging information between the electronic device and the first external electronic device. Even though the second external electronic device, which obtains the UWB ranging information between the electronic device and the first external electronic device, fails in the UWB measurement operation with the first external electronic device, the second external electronic device may participate in the distance-based service based on the UWB ranging information between the electronic device and the first external electronic device which is obtained via the electronic device.

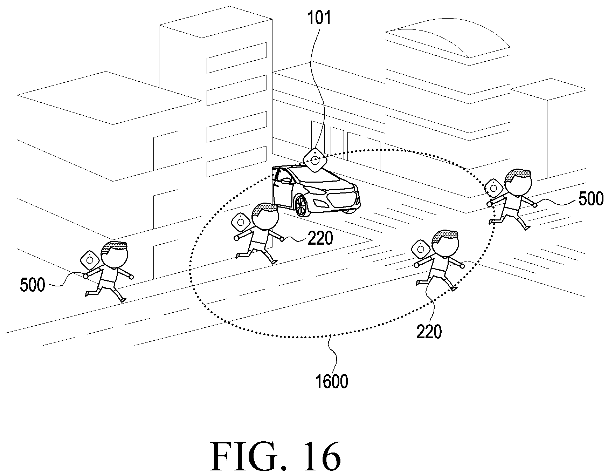

FIG. 16 is a diagram illustrating a scenario according to a process for sharing UWB ranging information in a wireless communication network according to an embodiment.

Referring to FIG. 16, a distance-based service (e.g., an anonymous distance-based service) may include a pedestrian safety service (e.g., a service notifying a collision risk for child).

In an embodiment, an electronic device 101 (e.g., an electronic device 101 in FIG. 1, 2, or 3) may include a smart phone and/or a wearable device of a driver riding in a vehicle. The electronic device 101 may be a tag UWB device, may be a requester UWB device, and may be an answerer UWB device.

In an embodiment, a first external electronic device 220 (e.g., an electronic device 102 in FIG. 1, and an external electronic device 220 in FIG. 2 or 4) may include a smart phone and/or a wearable device of a pedestrian (e.g., a child). The first external electronic device 220 may be a node UWB device, and may be a responder UWB device.

In an embodiment, a second external electronic device 500 (e.g., a second external electronic device 500 in FIG. 5) may include a smart phone and/or a wearable device of a driver riding in a vehicle. The second external electronic device 500 may be a tag UWB device, may be a requester UWB device, and may be a questioner UWB device.

In FIG. 16, a plurality of second external electronic devices 500 are illustrated, but the plurality of second external electronic devices 500 may actually be one UWB device, and for convenience of a description, the plurality of second external electronic devices 500 are illustrated according to a location in a service area 1600 in the distance-based service. Alternatively, the plurality of second external electronic devices 500 may be different UWB devices, and if the plurality of second external electronic devices 500 are the different UWB devices, the plurality of second external electronic devices 500 may be a plurality of UWB devices whose locations are different in the distance-based service.

In an embodiment, the electronic device 101 may estimate a distance between the electronic device 101 and the first external electronic device 220 as the electronic device 101 performs a UWB ranging operation with the first external electronic device 220. For example, the electronic device 101 may estimate ToF between the electronic device 101 and the first external electronic device 220 based on a TDoA scheme, and may estimate the distance between the electronic device 101 and the first external electronic device 220 based on the estimated ToF.

In an embodiment, the second external electronic device 500 may identify that it is required to perform a UWB ranging operation with the first external electronic device 220. The second external electronic device 500 may transmit a UWB ranging request message to the first external electronic device 220. However, due to various reasons, the second external electronic device 500 may not receive the UWB ranging response message, which is a response message to the UWB ranging request message, from the first external electronic device 220. In this case, the second external electronic device 500 may identify that information sharing is required to participate in the distance-based service. A scheme by which the second external electronic device 500 may identify that the information sharing is required may be implemented in various forms, the scheme by which the second external electronic device 500 may identify that the information sharing is required may be implemented similarly to or substantially the same as a scheme for identifying a need for information sharing, so a detailed description thereof will be omitted herein.

The second external electronic device 500, which identifies that the information sharing is required, may transmit an information share request message and receive an information share response message, which is a response message to the information share request message, from the electronic device 101. Even though the second external electronic device 500, which receives the information share response message transmitted by the electronic device 101, fails to perform the UWB ranging operation with the first external electronic device 220, the second external electronic device 500 may obtain UWB ranging information related to the UWB ranging operation between the electronic device 101 and the first external electronic device 220 based on the information share response message. The second external electronic device 500 may participate in the distance-based service based on the obtained UWB ranging information.

As illustrated in FIG. 16, even though a UWB device fails a UWB ranging operation in the service area 1600 of the distance-based service, if there is at least one neighbor UWB device which stores UWB ranging information among neighbor UWB devices around the UWB device, the UWB device may obtain the UWB ranging information from the at least one neighbor UWB device. The UWB device, which obtains the UWB ranging information from the at least one neighbor UWB device, may participate in the distance-based service based on the obtained UWB ranging information even though the UWB ranging operation fails.

According to an embodiment of the disclosure, an operating method of an electronic device (e.g., a second external electronic device 500 in FIG. 5) may include identifying whether a condition for sharing ranging information in a distance-based service is satisfied.

According to an embodiment of the disclosure, the operating method may further include transmitting a first message requesting to share the ranging information, based on identifying that the condition for sharing the ranging information is satisfied.

According to an embodiment of the disclosure, the operating method may further include receiving, from at least one external electronic device (e.g., an electronic device 101 in FIG. 1, 2, or 3), a second message including the ranging information in response to the first message.

According to an embodiment of the disclosure, identifying whether the condition for sharing the ranging information in the distance-based service is satisfied may include identifying that it is required to share the ranging information the condition for sharing the ranging information is satisfied if a ranging operation between the electronic device (e.g., the second external electronic device 500 in FIG. 5) and another external electronic device (e.g., an electronic device 102 in FIG. 1, or an external electronic device 220 in FIG. 2 or 4) fails.

According to an embodiment of the disclosure, identifying whether the condition for sharing the ranging information in the distance-based service is satisfied may include identifying that the condition for sharing the ranging information is satisfied if a ranging response message is not received from the other external electronic device (e.g., the electronic device 102 in FIG. 1, or the external electronic device 220 in FIG. 2 or 4) in response to the ranging request message transmitted to the other external electronic device (e.g., the electronic device 102 in FIG. 1, or the external electronic device 220 in FIG. 2 or 4).

According to an embodiment of the disclosure, identifying whether the condition for sharing the ranging information in the distance-based service is satisfied may include identifying that the condition for sharing the ranging information is satisfied, if an opportunity to transmit a ranging request message is not obtained in a ranging period in which it is possible to transmit the ranging request message to the other external electronic device (e.g., the electronic device 102 in FIG. 1, or the external electronic device 220 in FIG. 2 or 4), or if an opportunity to receive a ranging response message is not obtained in a monitoring period in which it is possible to receive the ranging response message from the other external electronic device (e.g., the electronic device 102 in FIG. 1, or the external electronic device 220 in FIG. 2 or 4) in response to the ranging request message transmitted to the other external electronic device (e.g., the electronic device 102 in FIG. 1, or the external electronic device 220 in FIG. 2 or 4).

According to an embodiment of the disclosure, the first message may include at least one of an address indicating that it is a broadcast message, or an identifier (ID) indicating that it is the first message requesting to share the ranging information.

According to an embodiment of the disclosure, the second message may include at least one of an address indicating that it is a broadcast message, an identifier (ID) indicating that it is a response message to the first message, or ranging information between the at least one external electronic device (e.g., the electronic device 101 in FIG. 1, 2, or 3) and the other external electronic device (e.g., the electronic device 102 in FIG. 1, or the external electronic device 220 in FIG. 2 or 4).

According to an embodiment of the disclosure, the ranging information between the at least one external electronic device (e.g., the electronic device 101 in FIG. 1, 2, or 3) and the other external electronic device (e.g., the electronic device 102 in FIG. 1, or the external electronic device 220 in FIG. 2 or 4) may include at least one of estimated time of flight (ToF) between the at least one external electronic device (e.g., the electronic device 101 in FIG. 1, 2, or 3) and the other external electronic device (e.g., the electronic device 102 in FIG. 1, or the external electronic device 220 in FIG. 2 or 4), information indicating a ranging role of each of the at least one external electronic device (e.g., the electronic device 101 in FIG. 1, 2, or 3) and the other external electronic device (e.g., the electronic device 102 in FIG. 1, or the external electronic device 220 in FIG. 2 or 4), information indicating a ranging slot in which a ranging operation between the at least one external electronic device (e.g., the electronic device 101 in FIG. 1, 2, or 3) and the other external electronic device (e.g., the electronic device 102 in FIG. 1, or the external electronic device 220 in FIG. 2 or 4) is to be performed, or an ID of each of a ranging request message and a ranging response message exchanged between the at least one external electronic device (e.g., the second external electronic device 500 in FIG. 5) and the other external electronic device (e.g., the electronic device 102 in FIG. 1, or the external electronic device 220 in FIG. 2 or 4).

According to an embodiment of the disclosure, a service role of the electronic device (e.g., the second external electronic device 500 in FIG. 5) may be a tag which initiates the distance-based service, and a ranging role of the electronic device (e.g., the second external electronic device 500 in FIG. 5) is a requester which initiates a ranging operation and a questioner which requests to share the ranging information, a service role of the at least one external electronic device (e.g., the electronic device 101 in FIG. 1, 2, or 3) may be the tag, and a ranging role of the at least one external electronic device (e.g., the electronic device 101 in FIG. 1, 2, or 3) is the requester and an answerer which shares the ranging information, and a service role of the other external electronic device (e.g., the electronic device 102 in FIG. 1, or the external electronic device 220 in FIG. 2 or 4) may be a node which responds to the tag, and a ranging role of the other external electronic device (e.g., the electronic device 102 in FIG. 1, or the external electronic device 220 in FIG. 2 or 4) is the requester and a responder which responds to the requester.

According to an embodiment of the disclosure, an operating method of an electronic device (e.g., an electronic device 101 in FIG. 1, 2, or 3) may include performing a ranging operation for a distance-based service with at least one external electronic device (e.g., an electronic device 102 in FIG. 1, or the external electronic device 220 in FIG. 2 or 4).

According to an embodiment of the disclosure, the operating method may further include receiving a first message requesting to share ranging information from another external electronic device (e.g., a second external electronic device 500 in FIG. 5).

According to an embodiment of the disclosure, the operating method may further include transmitting, to the other external electronic device (e.g., the second external electronic device 500 in FIG. 5), a second message including ranging information related to a ranging operation performed with the at least one external electronic device (e.g., the electronic device 102 in FIG. 1, or the external electronic device 220 in FIG. 2 or 4) in response to the first message.

According to an embodiment of the disclosure, the first message may be received if the other external electronic device (e.g., the second external electronic device 500 in FIG. 5) fails in a ranging operation with the at least one external electronic device (e.g., the electronic device 102 in FIG. 1, or the external electronic device 220 in FIG. 2 or 4).

According to an embodiment of the disclosure, the first message may include at least one of an address indicating that it is a broadcast message, or an identifier (ID) indicating that it is the first message requesting to share the ranging information, and the second message may include at least one of an address indicating that it is a broadcast message, an identifier (ID) indicating that it is a response message to the first message, or ranging information between the electronic device (e.g., the electronic device 101 in FIG. 1, 2, or 3) and the at least one external electronic device (e.g., the electronic device 102 in FIG. 1, or the external electronic device 220 in FIG. 2 or 4).

According to an embodiment of the disclosure, the ranging information between the electronic device (e.g., the electronic device 101 in FIG. 1, 2, or 3) and the at least one external electronic device (e.g., the electronic device 102 in FIG. 1, or the external electronic device 220 in FIG. 2 or 4) may include at least one of estimated time of flight (ToF) between the electronic device (e.g., the electronic device 101 in FIG. 1, 2, or 3) and the at least one external electronic device (e.g., the electronic device 102 in FIG. 1, or the external electronic device 220 in FIG. 2 or 4), information indicating a ranging role of each of the electronic device (e.g., the electronic device 101 in FIG. 1, 2, or 3) and the at least one external electronic device (e.g., the electronic device 102 in FIG. 1, or the external electronic device 220 in FIG. 2 or 4), information indicating a ranging slot in which a ranging operation between the electronic device (e.g., the electronic device 101 in FIG. 1, 2, or 3) and the at least one external electronic device (e.g., the electronic device 102 in FIG. 1, or the external electronic device 220 in FIG. 2 or 4) is to be performed, or an ID of each of a ranging request message and a ranging response message exchanged between the electronic device (e.g., the electronic device 101 in FIG. 1, 2, or 3) and the at least one external electronic device (e.g., the electronic device 102 in FIG. 1, or the external electronic device 220 in FIG. 2 or 4).

An embodiment of the disclosure may provide an electronic device for providing a distance-based service and an operating method thereof.

An embodiment of the disclosure may provide an electronic device for providing a distance-based service capable of relaying ranging information and an operating method thereof.

## Claims

1. An electronic device (500), comprising:
a communication circuit (502); and
at least one processor (504) operatively connected with the communication circuit, wherein the at least one processor is configured to:
identify whether a condition for sharing ranging information in a distance-based service is satisfied,
transmit, via the communication circuit, a first message requesting to share the ranging information, based on identifying that the condition for sharing the ranging information is satisfied, and
receive, from at least one external electronic device (101) via the communication circuit, a second message including the ranging information in response to the first message.

2. The electronic device of claim 1, wherein the at least one processor is configured to:
identify that the condition for sharing the ranging information is satisfied if a ranging operation between the electronic device and another external electronic device (102, 220) fails.

3. The electronic device of claim 2, wherein the at least one processor is configured to:
identify that the condition for sharing the ranging information is satisfied if a ranging response message is not received from the other external electronic device in response to the ranging request message transmitted to the other external electronic device.

4. The electronic device of claim 2, wherein the at least one processor is configured to:
identify that the condition for sharing the ranging information is satisfied, if an opportunity to transmit a ranging request message is not obtained in a ranging period in which it is possible to transmit the ranging request message to the other external electronic device, or if an opportunity to receive a ranging response message is not obtained in a monitoring period in which it is possible to receive the ranging response message from the other external electronic device in response to the ranging request message transmitted to the other external electronic device.

5. The electronic device of any one of claims 1 to 4, wherein the first message includes at least one of an address indicating that it is a broadcast message, or an identifier (ID) indicating that it is the first message requesting to share the ranging information.

6. The electronic device of any one of claims 1 to 5, wherein the second message includes at least one of an address indicating that it is a broadcast message, an identifier (ID) indicating that it is a response message to the first message, or ranging information between the at least one external electronic device and the other external electronic device.

7. The electronic device of claim 6, wherein the ranging information between the at least one external electronic device and the other external electronic device includes at least one of estimated time of flight (ToF) between the at least one external electronic device and the other external electronic device, information indicating a ranging role of each of the at least one external electronic device and the other external electronic device, information indicating a ranging slot in which a ranging operation between the at least one external electronic device and the other external electronic device is to be performed, or an ID of each of a ranging request message and a ranging response message exchanged between the at least one external electronic device and the other external electronic device.

8. The electronic device of any one of claims 1 to 7, wherein a service role of the electronic device is a tag which initiates the distance-based service, and a ranging role of the electronic device is a requester which initiates a ranging operation and a questioner which requests to share the ranging information,
wherein a service role of the at least one external electronic device is the tag, and a ranging role of the at least one external electronic device is the requester and an answerer which shares the ranging information, and
wherein a service role of the other external electronic device is a node which responds to the tag, and a ranging role of the other external electronic device is the requester and a responder which responds to the requester.

9. An electronic device (101), comprising:
a communication circuit (190, 302); and
at least one processor (120, 304) operatively connected with the communication circuit, wherein the at least one processor is configured to:
perform, via the communication circuit, a ranging operation for a distance-based service with at least one external electronic device (102, 220)
receive, via the communication circuit, a first message requesting to share ranging information from another external electronic device (500), and
transmit, to the other external electronic device via the communication circuit, a second message including ranging information related to a ranging operation performed with the at least one external electronic device in response to the first message.

10. The electronic device of claim 9, wherein the first message is received if the other external electronic device fails in a ranging operation with the at least one external electronic device.

11. The electronic device of claim 9 or 10, wherein the first message includes at least one of an address indicating that it is a broadcast message, or an identifier (ID) indicating that it is the first message requesting to share the ranging information, and
wherein the second message includes at least one of an address indicating that it is a broadcast message, an identifier (ID) indicating that it is a response message to the first message, or ranging information between the electronic device and the at least one external electronic device.

12. The electronic device of claim 11, wherein the ranging information between the electronic device and the at least one external electronic device includes at least one of estimated time of flight (ToF) between the electronic device and the at least one external electronic device, information indicating a ranging role of each of the electronic device and the at least one external electronic device, information indicating a ranging slot in which a ranging operation between the electronic device and the at least one external electronic device is to be performed, or an ID of each of a ranging request message and a ranging response message exchanged between the electronic device and the at least one external electronic device.

13. An operating method of an electronic device (500), the operating method comprising:
identifying whether a condition for sharing ranging information in a distance-based service is satisfied;
transmitting a first message requesting to share the ranging information, based on identifying that the condition for sharing the ranging information is satisfied; and
receiving, from at least one external electronic device (101), a second message including the ranging information in response to the first message.

14. The operating method of claim 13, wherein identifying whether the condition for sharing the ranging information in the distance-based service is satisfied comprises:
identifying that the condition for sharing the ranging information is satisfied if a ranging operation between the electronic device and another external electronic device (102, 220) fails.

15. The operating method of claim 14, wherein identifying whether the condition for sharing the ranging information in the distance-based service is satisfied comprises:
identifying that the condition for sharing the ranging information is satisfied, if an opportunity to transmit a ranging request message is not obtained in a ranging period in which it is possible to transmit the ranging request message to the other external electronic device, or if an opportunity to receive a ranging response message is not obtained in a monitoring period in which it is possible to receive the ranging response message from the other external electronic device in response to the ranging request message transmitted to the other external electronic device.
